# EUROPEAN PATENT APPLICATION

(11) **EP 4 276 648 A1**
(43) Date of publication of application: **15.11.2023**
(21) Application number: 21924321.9
(22) Date of filing: 24.11.2021
(51) Int. Cl.: G06F 16/23

(54) **METHOD AND APPARATUS FOR UPDATING MAP TILE**

(30) Priority: 07.02.2021 CN 202110179628
(71) Applicant: Huawei Technologies Co., Ltd., Shenzhen, Guangdong 518129 (CN)
(72) Inventor: ZHOU, Zheng, Shenzhen, Guangdong 518129 (CN); MA, Tao, Shenzhen, Guangdong 518129 (CN); LIU, Jianqin, Shenzhen, Guangdong 518129 (CN)
(74) Representative: Isarpatent
(86) International application number: PCT/CN2021/132912
(87) International publication number: WO 2022/166326

(57) **Abstract**

A map tile update method is provided, including: A first device receives map update information from a second device, where the map update information includes identifiers of a plurality of to-be-updated map tiles; the first device obtains an update policy based on the map update information, where the update policy includes an update sequence of the plurality of to-be-updated map tiles; and the first device downloads update information of the to-be-updated map tiles according to the update policy and the update sequence. In this method, the update policy is determined based on the map update information, related map tiles are determined, and the update sequence of the map tiles is determined, so that some map tiles can be preferentially updated for use. In this way, an update waiting time can be reduced, and a part of a map can be updated in a timely manner, so that driving risks are reduced.

## Description

This application claims priority to Chinese Patent Application No. 202110179628.2, filed with the China National Intellectual Property Administration on February 7, 2021 and entitled "MAP TILE UPDATE METHOD AND APPARATUS", which is incorporated herein by reference in its entirety.

### TECHNICAL FIELD

This application relates to the field of intelligent driving technologies, and in particular, to a map tile update method and apparatus.

### BACKGROUND

Over the air (over the air, OTA) is a way to upgrade automobile software. Specifically, a vehicle may be connected to a cloud by using the OTA technology, and then download a vehicle upgrade package and update automobile software, so as to remotely upgrade automobile software or fix automobile software defects. A map is closely related to driving. A vehicle needs to update a map in a timely manner to ensure accuracy of map data. Therefore, updating the map in the vehicle becomes an important part of automotive OTA. Generally, the map in the vehicle is managed based on map tiles. A map tile is a raster image that is obtained by slicing a map region into several rows and columns based on a specific size and format, a zoom level, or a scale. When the map is updated, the vehicle downloads the latest version of the map tile from the cloud to update the map.

In a conventional technology, when a vehicle updates a map, the vehicle can use the map only after all map tiles are updated.

In this case, the vehicle needs to wait for a long time before the map is updated, and an accurate driving policy cannot be determined in a timely manner based on an updated map during driving. Consequently, a driving safety risk of the vehicle is high.

### SUMMARY

Embodiments of this application provide a map tile update method and apparatus, to determine an update policy based on map update information, determine related map tiles, and determine an update sequence of the map tiles, so that some map tiles can be preferentially updated for use. In this way, an update waiting time can be reduced, and a part of a map can be updated in a timely manner, so that driving risks are reduced.

According to a first aspect, an embodiment of this application provides a map tile update method, including: a first device receives map update information from a second device, where the map update information includes identifiers of a plurality of to-be-updated map tiles; the first device obtains an update policy based on the map update information, where the update policy includes an update sequence of the plurality of to-be-updated map tiles; and the first device downloads update information of the to-be-updated map tiles according to the update policy and the update sequence. In this way, the first device determines related map tiles based on the map update information, and then determines an update sequence of the map tiles, so that some map tiles can be preferentially updated for use. Therefore, the first device can reduce an update waiting time, and update a part of a map in a timely manner, thereby reducing driving risks.

Optionally, the update policy is related to one or more of the following auxiliary information: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device. In this way, when determining the update policy, the first device can have rich choices, so that the update policy can be obtained in various scenarios, and the map tiles can be updated sequentially.

Optionally, when the update policy is related to the planned traveling path of the first device, that the first device obtains an update policy based on the map update information includes: the first device sorts the plurality of to-be-updated map tiles based on a trajectory of the traveling path, to obtain the update policy.

In this way, map update is more targeted, and it can be ensured that map tiles related to the trajectory of the traveling path are preferentially downloaded and updated, thereby reducing an update time of the tiles that are to be used by the first device, updating related map information in a timely manner, and reducing a security risk during use of the map.

Optionally, that the first device sorts the plurality of to-be-updated map tiles based on a trajectory of the traveling path includes: the first device determines, from the plurality of to-be-updated map tiles, the to-be-updated map tiles related to the trajectory of the traveling path; and the first device sorts, in a direction from a start point to an end point of the trajectory of the traveling path, the to-be-updated map tiles related to the trajectory of the traveling path. In this way, the first device can preferentially update the to-be-used map tiles based on an estimated use sequence of the map tiles, so that the first device can adjust the map tiles in a timely manner, thereby reducing driving risks.

Optionally, when the update policy is related to the distances between the location of the first device and the geographical locations corresponding to the plurality of to-be-updated map tiles, that the first device obtains an update policy based on the map update information includes: the first device sorts the plurality of to-be-updated map tiles based on the distances, to obtain the update policy.

In this way, map update is more targeted, and it can be ensured that the map tiles near the location of the first device are preferentially downloaded and updated, and map information near the first device is updated in a timely manner, thereby reducing a security during use of the map.

Optionally, when the update policy is related to the importance of the plurality of to-be-updated map tiles, the map update information further includes importance information of the to-be-updated map tiles, where the importance of the to-be-updated map tiles is positively correlated with a degree of impact of a change in a map element in the to-be-updated map tiles on driving; and that the first device obtains an update policy based on the map update information includes: the first device sorts the plurality of to-be-updated map tiles based on the importance information of the plurality of to-be-updated map tiles, to obtain the update policy. In this way, the first device performs adjustment in a timely manner based on road information, thereby reducing driving risks.

Optionally, the importance information includes first information used to represent importance, or second information used to represent unimportance; and that the first device sorts the plurality of to-be-updated map tiles based on the importance information of the plurality of to-be-updated map tiles includes: the first device places the to-be-updated map tiles carrying the first information in front of the to-be-updated map tiles carrying the second information. In this way, the map tiles including important information are placed in the front, and are preferentially updated for use, so that the first device learns an important change of a road as early as possible, thereby reducing driving risks.

Optionally, when the update policy is related to the map content similarities, the map update information further includes the map content similarities of the to-be-updated map tiles; and that the first device obtains an update policy based on the map update information includes: the first device sorts the plurality of to-be-updated map tiles based on the map content similarities, to obtain the update policy. In this way, the first device preferentially downloads the map tiles with low similarities and large differences in map content, so that the first device performs adjustment in a timely manner based on the map content, thereby reducing driving risks.

Optionally, when the update policy is related to the versions of the plurality of to-be-updated map tiles in the first device, the map update information further includes identifiers of the latest versions of the to-be-updated map tiles; and that the first device obtains an update policy based on the map update information includes: the first device sorts the plurality of to-be-updated map tiles based on version differences between the versions of the to-be-updated map tiles in the first device and the latest versions of the to-be-updated map tiles, to obtain the update policy. In this way, the first device preferentially updates the map tiles that are not updated for a long time, so that the first device can use a new map, thereby improving accuracy of the map and reducing a risk during use of the map.

Optionally, when the update policy is related to the plurality of types of the auxiliary information, that the first device obtains an update policy based on the map update information includes: the first device sorts the plurality of to-be-updated map tiles based on priorities of the plurality of types of the auxiliary information and/or weights of the plurality of types of the auxiliary information, to obtain the update policy.

In this way, when determining the update policy, the first device can comprehensively consider various factors, so as to update the map tiles sequentially in various scenarios.

Optionally, that a first device receives map update information from a second device includes: the first device sends query information to the second device; and the first device receives the map update information from the second device, where the map update information is sent by the second device in response to the query information. In this way, the first device can query and update the map in a timely manner, and use the latest map, thereby reducing driving risks.

Optionally, the first device is a map over the air OTA upgrade client, and the second device is a map OTA upgrade cloud device; or the first device is a master OTA upgrade client in a vehicle, and the second device is an automaker's OTA upgrade cloud device.

Optionally, the map update information further includes an update policy. In this way, the first device can directly obtain the update policy, so that the first device does not need to sort the map tiles based on the auxiliary information, thereby reducing an update time of the map tiles and saving computing resources of the first device.

According to a second aspect, an embodiment of this application provides a map tile update method, including: a second device determines map update information; and the second device sends the map update information to a first device; where the map update information includes identifiers of a plurality of to-be-updated map tiles, the map update information further includes an update policy or auxiliary information, the update policy includes an update sequence of the plurality of to-be-updated map tiles, and the auxiliary information is used by the first device to generate the update policy.

Optionally, the auxiliary information includes one or more of the following: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

Optionally, when the map update information includes the update policy, that a second device determines map update information includes: the second device sorts the plurality of to-be-updated map tiles based on a trajectory of the planned traveling path of the first device, to obtain the update policy.

Optionally, when the map update information includes the update policy, that a second device determines map update information includes: the second device sorts the plurality of to-be-updated map tiles based on the distances between the geographical locations corresponding to the plurality of to-be-updated map tiles and the location of the first device, to obtain the update policy.

Optionally, when the map update information includes the update policy, that a second device determines map update information includes: the second device sorts the plurality of to-be-updated map tiles based on the importance of the plurality of to-be-updated map tiles, to obtain the update policy, where the importance of the to-be-updated map tiles is positively correlated with a degree of impact of a change in a map element in the to-be-updated map tiles on driving.

Optionally, the importance information includes first information used to represent importance, or second information used to represent unimportance; and that a second device determines map update information includes: the second device sets the first information for the to-be-updated map tiles whose road information changes, and the second device sets the second information for the to-be-updated map tiles whose road information does not change.

Optionally, when the map update information includes the update policy, that a second device determines map update information includes: the second device sorts the plurality of to-be-updated map tiles based on the map content similarities between the versions of the plurality of to-be-updated map tiles in the first device and the latest versions of the plurality of to-be-updated map tiles, to obtain the update policy.

Optionally, when the map update information includes the update policy, that a second device determines map update information includes: the second device sorts the plurality of to-be-updated map tiles based on the freshness of the plurality of to-be-updated map tiles in the first device, to obtain the update policy.

Optionally, when the map update information includes the update policy, that a second device determines map update information includes: the second device sorts the plurality of to-be-updated map tiles based on priorities of the plurality of types of the auxiliary information and/or weights of the plurality of types of the auxiliary information, to obtain the update policy. Optionally, that a second device determines map update information includes: the second device calculates a map content similarity between a version of each of the plurality of to-be-updated map tiles in the first device and a latest version; and the second device sets the map content similarity for each of the plurality of to-be-updated map tiles.

Optionally, that the second device sends the map update information to a first device includes: the second device receives query information from the first device; and the second device sends the map update information to the first device in response to the query information.

Optionally, the first device is a map over the air OTA upgrade client, and the second device is a map OTA upgrade cloud device; or the first device is a master OTA upgrade client in a vehicle, and the second device is an automaker's OTA upgrade cloud device.

According to a third aspect, an embodiment of this application provides a map tile update apparatus, applied to a first device.

The map tile update apparatus may be a vehicle having a map tile update function, or another component having a map tile update function. The map tile update apparatus includes, but is not limited to, an in-vehicle terminal, an in-vehicle controller, an in-vehicle module, an in-vehicle component, an in-vehicle chip, an in-vehicle unit, or the like. The vehicle may implement the method provided in this application by using the in-vehicle terminal, the in-vehicle controller, the in-vehicle module, the in-vehicle component, the in-vehicle chip, the in-vehicle unit, or the like.

The map tile update apparatus may be a vehicle auxiliary device having a map tile update function, for example, a charging pile.

The map tile update apparatus may be an intelligent terminal, or may be disposed in another intelligent terminal having a map tile update function except a vehicle, or may be disposed in a component of the intelligent terminal. The intelligent terminal may be another terminal device such as an intelligent transportation device or a robot. The map tile update apparatus includes, but is not limited to, an intelligent terminal or a controller, a chip, and another component in the intelligent terminal.

The map tile update apparatus may be a general-purpose device or a special-purpose device. In specific implementation, the apparatus may alternatively be a desktop computer, a portable computer, a network server, a palmtop computer (personal digital assistant, PDA), a mobile phone, a tablet computer, a wireless terminal device, an embedded device, or another device having a processing function. A type of the map tile update apparatus is not limited in this embodiment of this application.

The map tile update apparatus may alternatively be a chip or a processor having a processing function, and the map tile update apparatus may include at least one processor. The processor may be a single-core processor (single-CPU), or may be a multi-core processor (multi-CPU). The chip or the processor having a processing function may be disposed in a sensor, or may not be disposed in a sensor, but may be disposed at a receive end of an output signal of the sensor. The processor includes, but is not limited to, at least one of a central processing unit (central processing unit, CPU), a graphics processing unit (graphics processing unit, GPU), a micro control unit (micro control unit, MCU), a microprocessor (microprocessor unit, MPU), or a coprocessor.

Alternatively, the map tile update apparatus may be a terminal device, or may be a chip or a chip system in a terminal device. The map tile update apparatus may include a processing unit and a communication unit. When the map tile update apparatus is a terminal device, the processing unit may be a processor. The map tile update apparatus may further include a storage unit, and the storage unit may be a memory. The storage unit is configured to store instructions, and the processing unit executes the instructions stored in the storage unit, so that the terminal device implements the map tile update method according to any one of the first aspect or the possible implementations of the first aspect. When the map tile update apparatus is a chip or a chip system in a terminal device, the processing unit may be a processor. The processing unit executes the instructions stored in a storage unit, so that the terminal device implements the map tile update method according to any one of the first aspect or the possible implementations of the first aspect. The storage unit may be a storage unit (for example, a register or a cache) in the chip, or may be a storage unit (for example, a read-only memory or a random access memory) that is in the terminal device and that is outside the chip.

For example, the communication unit is configured to receive map update information from a second device, where the map update information includes identifiers of a plurality of to-be-updated map tiles; the processing unit is configured to obtain an update policy based on the map update information, where the update policy includes an update sequence of the plurality of to-be-updated map tiles; and the processing unit is further configured to download update information of the to-be-updated map tiles according to the update policy and the update sequence.

Optionally, the update policy is related to one or more of the following auxiliary information: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and the versions of the plurality of to-be-updated map tiles in the first device.

Optionally, when the update policy is related to the planned traveling path of the first device, the processing unit is specifically configured to sort the plurality of to-be-updated map tiles based on a trajectory of the traveling path, to obtain the update policy.

Optionally, the processing unit is specifically configured to determine, from the plurality of to-be-updated map tiles, the to-be-updated map tiles related to the trajectory of the traveling path; and the processing unit is further configured to sort, in a direction from a start point to an end point of the trajectory of the traveling path, the to-be-updated map tiles related to the trajectory of the traveling path.

Optionally, when the update policy is related to the distances between the location of the first device and the geographical locations corresponding to the plurality of to-be-updated map tiles, the processing unit is specifically configured to sort the plurality of to-be-updated map tiles based on the distances, to obtain the update policy.

Optionally, when the update policy is related to the importance of the plurality of to-be-updated map tiles, the map update information further includes importance information of the to-be-updated map tiles, where the importance of the to-be-updated map tiles is positively correlated with a degree of impact of a change in a map element in the to-be-updated map tiles on driving; and the processing unit is specifically configured to sort the plurality of to-be-updated map tiles based on the importance information of the plurality of to-be-updated map tiles, to obtain the update policy.

Optionally, the importance information includes first information used to represent importance, or second information used to represent unimportance; and the processing unit is specifically configured to place the to-be-updated map tiles carrying the first information in front of the to-be-updated map tiles carrying the second information.

Optionally, when the update policy is related to the map content similarities, the processing unit is specifically configured to sort the plurality of to-be-updated map tiles based on the map content similarities, to obtain the update policy.

Optionally, when the update policy is related to the freshness of the plurality of to-be-updated map tiles in the first device, the processing unit is specifically configured to sort the plurality of to-be-updated map tiles based on the freshness of the to-be-updated map tiles in the first device, to obtain the update policy.

Optionally, when the update policy is related to a plurality of types of the auxiliary information, the processing unit is specifically configured to sort the plurality of to-be-updated map tiles based on priorities of the plurality of types of the auxiliary information and/or weights of the plurality of types of the auxiliary information, to obtain the update policy.

Optionally, the communication unit is further configured to send query information to a second device; and the communication unit is further configured to receive the map update information from the second device, where the map update information is sent by the second device in response to the query information.

Optionally, the first device is a map over the air OTA upgrade client, and the second device is a map OTA upgrade cloud device; or the first device is a master OTA upgrade client in a vehicle, and the second device is an automaker's OTA upgrade cloud device.

Optionally, the map update information further includes an update policy.

According to a fourth aspect, an embodiment of this application provides a map tile update apparatus, applied to a second device.

The map tile update apparatus may be a vehicle, a vehicle auxiliary device, or a server that has map tile data, or another component that has map tile data. The map tile update apparatus includes, but is not limited to, an in-vehicle terminal, an in-vehicle controller, an in-vehicle module, an in-vehicle component, an in-vehicle chip, an in-vehicle unit, a charging pile, an OTA server, a server of a map supplier, and the like. The vehicle may implement the method provided in this application by using the in-vehicle terminal, the in-vehicle controller, the in-vehicle module, the in-vehicle component, the in-vehicle chip, the in-vehicle unit, or the like. The charging pile, the OTA server, the server of the map supplier, and the like may implement the method provided in this application by themselves.

The map tile update apparatus may be an intelligent terminal, or may be disposed in another intelligent terminal having a map tile update function except a vehicle, or may be disposed in a component of the intelligent terminal. The intelligent terminal may be another terminal device such as an intelligent transportation device or a robot. The map tile update apparatus includes, but is not limited to, an intelligent terminal or a controller, a chip, and another component in the intelligent terminal.

The map tile update apparatus may be a general-purpose device or a special-purpose device. In specific implementation, the apparatus may alternatively be a desktop computer, a portable computer, a network server, a palmtop computer (personal digital assistant, PDA), a mobile phone, a tablet computer, a wireless terminal device, an embedded device, or another device having a processing function. A type of the map tile update apparatus is not limited in this embodiment of this application.

The map tile update apparatus may alternatively be a chip or a processor having a processing function, and the map tile update apparatus may include at least one processor. The processor may be a single-core processor (single-CPU), or may be a multi-core processor (multi-CPU). The chip or the processor having a processing function may be disposed in a sensor, or may not be disposed in a sensor, but may be disposed at a receive end of an output signal of the sensor. The processor includes, but is not limited to, at least one of a central processing unit (central processing unit, CPU), a graphics processing unit (graphics processing unit, GPU), a micro control unit (micro control unit, MCU), a microprocessor (microprocessor unit, MPU), or a coprocessor.

Alternatively, the map tile update apparatus may be a terminal device, or may be a chip or a chip system in a terminal device. The map tile update apparatus may include a processing unit and a communication unit. When the map tile update apparatus is a terminal device, the processing unit may be a processor. The map tile update apparatus may further include a storage unit, and the storage unit may be a memory. The storage unit is configured to store instructions, and the processing unit executes the instructions stored in the storage unit, so that the terminal device implements the map tile update method according to any one of the first aspect or the possible implementations of the first aspect. When the map tile update apparatus is a chip or a chip system in a terminal device, the processing unit may be a processor. The processing unit executes the instructions stored in a storage unit, so that the terminal device implements the map tile update method according to any one of the first aspect or the possible implementations of the first aspect. The storage unit may be a storage unit (for example, a register or a cache) in the chip, or may be a storage unit (for example, a read-only memory or a random access memory) that is in the terminal device and that is outside the chip.

For example, the processing unit is configured to determine map update information; and the communication unit is configured to send the map update information to a first device, where the map update information includes identifiers of a plurality of to-be-updated map tiles, the map update information further includes an update policy or auxiliary information, the update policy includes an update sequence of the plurality of to-be-updated map tiles, and the auxiliary information is used by the first device to generate the update policy.

Optionally, the auxiliary information includes one or more of the following: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

Optionally, when the map update information includes the update policy, the processing unit is specifically configured to sort the plurality of to-be-updated map tiles based on a trajectory of the planned traveling path of the first device, to obtain the update policy.

Optionally, when the map update information includes the update policy, the processing unit is specifically configured to sort the plurality of to-be-updated map tiles based on the distances between the geographical locations corresponding to the plurality of to-be-updated map tiles and the location of the first device, to obtain the update policy.

Optionally, when the map update information includes the update policy, the processing unit is specifically configured to sort the plurality of to-be-updated map tiles based on the importance of the plurality of to-be-updated map tiles, to obtain the update policy, where the importance of the to-be-updated map tiles is positively correlated with a degree of impact of a change in a map element in the to-be-updated map tiles on driving.

Optionally, the importance information includes first information used to represent importance, or second information used to represent unimportance; the processing unit is specifically configured to set the first information for the to-be-updated map tiles whose road information changes; and the processing unit is further configured to set the second information for the to-be-updated map tile whose road information does not change.

Optionally, when the map update information includes the update policy, the processing unit is specifically configured to sort the plurality of to-be-updated map tiles based on the map content similarities between the versions of the plurality of to-be-updated map tiles in the first device and the latest versions of the plurality of to-be-updated map tiles, to obtain the update policy.

Optionally, when the map update information includes the update policy, the processing unit is specifically configured to sort the plurality of to-be-updated map tiles based on the freshness of the plurality of to-be-updated map tiles in the first device, to obtain the update policy.

Optionally, when the map update information includes the update policy, the processing unit is specifically configured to sort the plurality of to-be-updated map tiles based on priorities of the plurality of types of the auxiliary information and/or weights of the plurality of types of the auxiliary information, to obtain the update policy.

Optionally, the processing unit is specifically configured to calculate a map content similarity between a version of each of the plurality of to-be-updated map tiles in the first device and a latest version; and the processing unit sets the map content similarity for each of the plurality of to-be-updated map tiles.

Optionally, the communication unit is specifically configured to receive query information from the first device; and the communication unit is further configured to send the map update information to the first device in response to the query information.

Optionally, the first device is a map over the air OTA upgrade client, and the second device is a map OTA upgrade cloud device; or the first device is a master OTA upgrade client in a vehicle, and the second device is an automaker's OTA upgrade cloud device.

According to a fifth aspect, an embodiment of this application further provides a system, applied to autonomous driving or intelligent driving. The system includes at least one map tile update apparatus described in the foregoing embodiments of this application, and the at least one apparatus in the system may be integrated into an entire system or a device, or the at least one apparatus in the system may be independently disposed as an element or an apparatus.

Further, any one of the foregoing systems may interact with a central controller of a vehicle, to provide map information for driving of the vehicle.

According to a sixth aspect, an embodiment of this application further provides a terminal, and the terminal includes at least one map tile update apparatus described in the embodiments of this application or any one of the foregoing systems. Further, the terminal may be an intelligent transportation device (including an unmanned aerial vehicle, a vehicle, or the like).

According to a seventh aspect, an embodiment of this application provides a chip, including at least one processor and an interface. The interface is configured to provide program instructions or data for the at least one processor; and the at least one processor is configured to execute the program instructions, to implement the method according to the first aspect or the second aspect.

According to an eighth aspect, an embodiment of this application provides a map tile update apparatus, including at least one processor, configured to invoke a program in a memory, to perform the method according to the first aspect or the second aspect.

According to a ninth aspect, an embodiment of this application provides a map tile update apparatus, including at least one processor and an interface circuit. The interface circuit is configured to provide an information input and/or an information output for the at least one processor; and the at least one processor is configured to perform the method according to the first aspect or the second aspect.

According to a tenth aspect, an embodiment of this application provides a computer-readable storage medium. The computer-readable storage medium stores instructions, and when the instructions are executed, a computer is enabled to perform the method according to the first aspect or the second aspect.

According to an eleventh aspect, an embodiment of this application provides a computer program product. The program product includes a computer program, and the computer program is stored in a readable storage medium. At least one processor of an electronic device may read the computer program from the readable storage medium, and the at least one processor executes the computer program, to enable the electronic device to implement the method according to the first aspect or the second aspect.

It should be understood that the third aspect to the eleventh aspect of this application correspond to the technical solutions of the first aspect or the second aspect of this application, and beneficial effects achieved by the aspects and the corresponding feasible implementations are similar. Details are not described again.

### BRIEF DESCRIPTION OF DRAWINGS

FIG. 1 is a schematic diagram of a first specific application scenario according to an embodiment of this application;
FIG. 2 is a schematic diagram of a second specific application scenario according to an embodiment of this application;
FIG. 3 is a schematic diagram of an architecture of a map update system in a vehicle according to an embodiment of this application;
FIG. 4 is a schematic diagram of a third specific application scenario according to an embodiment of this application;
FIG. 5 is a schematic diagram of a fourth specific application scenario according to an embodiment of this application;
FIG. 6 is a schematic diagram of a raster model according to an embodiment of this application;
FIG. 7 is a schematic flowchart of a map tile update method according to an embodiment of this application;
FIG. 8 is a schematic flowchart of a specific map tile update method according to an embodiment of this application;
FIG. 9 is a schematic diagram of a map according to an embodiment of this application;
FIG. 10 is a schematic flowchart of a specific map tile update method according to an embodiment of this application;
FIG. 11 is a schematic flowchart of a specific map tile update method according to an embodiment of this application;
FIG. 12 is a schematic flowchart of a specific map tile update method according to an embodiment of this application;
FIG. 13 is a schematic flowchart of a specific map tile update method according to an embodiment of this application;
FIG. 14 is a schematic diagram of a structure of a map tile update apparatus according to an embodiment of this application;
FIG. 15 is a schematic diagram of a structure of a chip according to an embodiment of this application;
FIG. 16 is a schematic diagram of a structure of a map tile update apparatus applied to a first device according to an embodiment of this application; and
FIG. 17 is a schematic diagram of a structure of a vehicle according to an embodiment of this application.

### DESCRIPTION OF EMBODIMENTS

To clearly describe the technical solutions in embodiments of this application, terms such as "first" and "second" are used in the embodiments of this application to distinguish between same items or similar items that provide basically same functions or purposes. For example, a first network and a second network are merely intended to distinguish between different networks, and are not intended to limit a sequence thereof. A person skilled in the art may understand that the words such as "first" and "second" do not limit a quantity or an execution sequence, and the words such as "first" and "second" do not indicate a definite difference.

It should be noted that, in this application, the terms "example" or "for example" is used to represent giving an example, an illustration, or a description. Any embodiment or design scheme described as an "example" or "for example" in this application should not be explained as being preferred or advantageous over other embodiments or design schemes. To be precise, the word such as "example" or "for example" is intended to present a related concept in a specific manner.

With development of autonomous driving technologies, people have increasingly high requirements for computing and control capabilities of vehicles, and a growing quantity of vehicle functions are provided in a form of software. Software-defined vehicles have become an important trend in automobile development. Software-defined vehicles are future vehicles that are determined by software technologies with artificial intelligence as the core. It is required that software of such vehicles be installed and updated as easily as software of computers or smartphones. For conventional updating and upgrading of automobile software, professional technicians update the automobile software by using special-purpose devices in 4S shops or maintenance outlets. Currently, automobile software can be remotely upgraded or automobile software defects can be fixed by using the OTA technology. Specifically, a vehicle is connected to a cloud by using the OTA technology, downloads a vehicle upgrade package, and updates the automobile software. In this way, the time and space limits of the automobile software upgrade are avoided.

A map is closely related to driving. In particular, high-precision map data is an important input of an intelligent driving function. Accuracy and effectiveness of the high-precision map data affect driving safety of autonomous driving. As traffic environment constantly changes with time, map data also constantly changes, and data changes of different elements and different areas are also different. In this case, a vehicle needs to update a map in a timely manner to ensure accuracy and validity of map data. Therefore, updating the map in vehicle becomes an important part of automotive OTA.

Generally, the map in the vehicle is managed based on map tiles. A map tile is a raster image that is obtained by slicing a map region into several rows and columns based on a specific size and format, a zoom level, or a scale. When the map is updated, the vehicle downloads the latest version of the map tile from the cloud to update the map. For example, to accelerate map update, incremental update is used to update the map, and only changed map tiles are updated, thereby reducing an amount of map update data.

However, when the vehicle updates the map, the vehicle cannot determine related map tiles, and can use the map only after all map tiles are updated.

In this case, the vehicle needs to wait for a long time before the map is updated, and an accurate driving policy cannot be determined in a timely manner based on an updated map during driving. Consequently, a driving safety risk of the vehicle is high.

Based on this, according to the methods provided in the embodiments of this application, a vehicle determines a map update policy based on map update information, determines related map tiles, determines an update sequence of the tiles, and preferentially updates some map tiles for use. In this way, an update waiting time can be reduced, and a part of a map can be updated in a timely manner, so that driving risks are reduced.

The methods and the apparatuses provided in the embodiments of this application may be applied to a network system including a first device and a second device. There may be one or more first devices and/or one or more second devices.

The first device may be a vehicle in any form in which software upgrade needs to be performed, a vehicle auxiliary device in any form (for example, a vehicle charging pile), or the like. This is not specifically limited in the embodiments of this application.

The second device may be an OTA server configured to deliver an entire vehicle upgrade package, or may be a proxy server. For example, the proxy server may be a server serving a vehicle fleet. When the second device is a proxy server, the proxy server may first establish secure communication with the OTA server through two-way authentication. Then, the proxy server sends hardware and software information of the vehicle to the OTA server. After generating the entire vehicle upgrade package, the OTA server may deliver the entire vehicle upgrade package to the proxy server. It may be understood that the OTA server may also deliver the entire vehicle upgrade package to a plurality of proxy servers.

Alternatively, the second device may be a map client server configured to update a map, or may be a vehicle fleet server or any other possible server that has obtained and updated a map from the map client server.

The second device may alternatively be a vehicle in any form, a vehicle auxiliary device (for example, a vehicle charging pile), or a mobile terminal (for example, a mobile phone, a tablet, or a wearable device). This is not specifically limited in the embodiments of this application.

The first device and the second device may establish a communication connection. For example, the first device and the second device may establish a communication connection by using a protocol such as the Hypertext Transfer Protocol (hypertext transfer protocol, HTTP) or the Hypertext Transfer Protocol over Secure Socket Layer (hypertext transfer protocol over secure socket layer, HTTPS). This is not limited in the embodiments of this application.

The first device and the second device may also implement P2P communication through a communication connection in any form. For example, the first device and the second device may implement P2P communication through wireless transmission, for example, Bluetooth (Bluetooth) transmission, carrierless communication (ultra wide band, UWB), or infrared transmission.

P2P communication may also be implemented between the first device and the second device through wired transmission.

The first device and the second device may also implement P2P communication based on an index server, and the index server may be an OTA server or any other server. For example, the index server may store a resource list, and the resource list includes an association relationship between the first device and a resource identifier in the first device, and an association relationship between the second device and a resource identifier in the second device. When the first device needs to obtain a resource, the first device obtains a resource list in each device from the index server, and determines, from the resource list, that a device including an identifier of the resource is the second device, and then the first device may further obtain the resource from the second device through the foregoing wired communication or wireless communication.

The foregoing network system may be used by a vehicle to obtain map update information and map tiles from a cloud server, or may be used by a vehicle to obtain map update information and map tiles from another vehicle, or may be used by a vehicle to obtain map update information and map tiles from a vehicle auxiliary device. For details, refer to the following scenarios:

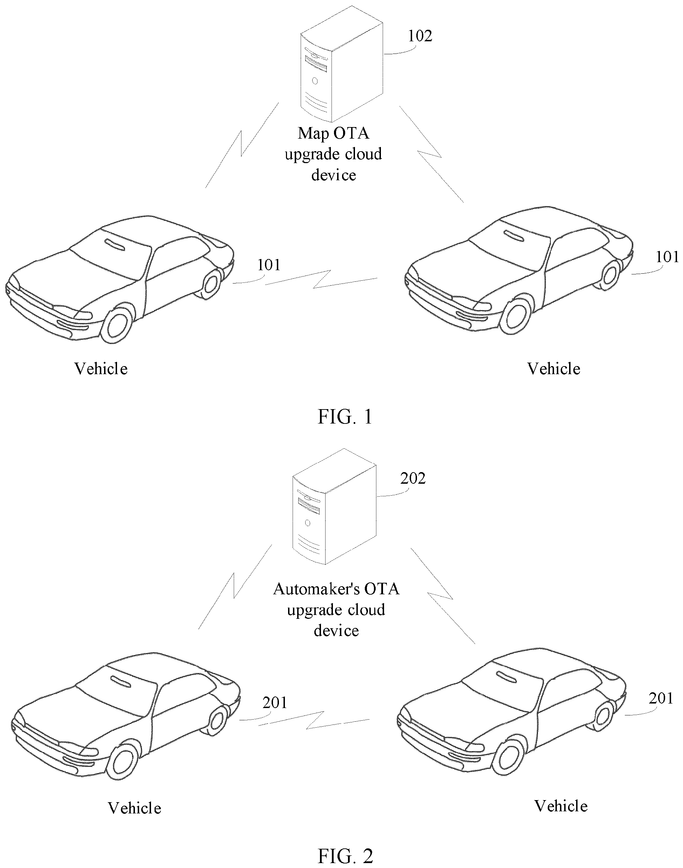

For example, FIG. 1 is a schematic diagram of a first specific application scenario according to an embodiment of this application. In this application scenario, the first device is a vehicle, and the second device is a map OTA cloud device. As shown in FIG. 1, the network system may include a vehicle 101 and a map OTA cloud device 102. The vehicle 101 is a vehicle in any form on which a map OTA client is installed. The map OTA cloud device 102 is a server of a map supplier, and is configured to manage map software and store map data. The map OTA cloud device 102 may send, to the map OTA client in the vehicle 101 automatically or according to a request command of the map OTA client, identifiers of to-be-updated map tiles and update information of the to-be-updated map tiles. The map OTA client in the vehicle 101 may obtain an update policy based on the identifiers that are of the to-be-updated map tiles and that are received from the map OTA cloud device, and download, according to the update policy, the update information of the to-be-updated map tiles from the map OTA cloud device, to update the map.

In addition, a plurality of vehicles 101 may also be in communication connection to each other, to transmit map update information and map tiles to each other. For example, the plurality of vehicles 101 may send query information to query a map version. A vehicle including a map of a later version may send, to a vehicle including a map of an earlier version, identifiers of to-be-updated map tiles and update information of the to-be-updated map tiles. The vehicle including the map of the later version obtains an update policy based on the received identifiers of the to-be-updated map tiles, and downloads, according to the update policy, the update information of the to-be-updated map tiles, to update the map.

There may be one or more vehicles 101 and map OTA cloud devices 102. This is not specifically limited in this embodiment of this application.

For example, FIG. 2 is a schematic diagram of a second specific application scenario according to an embodiment of this application. In this application scenario, the first device is a vehicle, and the second device is an automaker's OTA upgrade cloud device. As shown in FIG. 2, a network system may include a vehicle 201 and an automaker's OTA upgrade cloud device 202. The vehicle 201 is a vehicle in any form on which an OTA client is installed. The automaker's OTA upgrade cloud device 202 may be an OTA server configured to deliver an entire vehicle upgrade package.

The automaker's OTA upgrade cloud device 202 may send the entire vehicle upgrade package to an OTA client in the vehicle automatically or according to a request command of the OTA client. The OTA client receives the entire vehicle upgrade package from the automaker's OTA upgrade cloud device 202, where the entire vehicle upgrade package may include identifiers of to-be-updated map tiles and update information of the to-be-updated map tiles. The OTA client obtains the update policy based on the identifiers of the to-be-updated map tiles in the vehicle upgrade package, and downloads, according to the update policy, the update information of the to-be-updated map tiles in the vehicle upgrade package, to update the map.

There may be one or more vehicles 201 and one or more automaker's OTA upgrade cloud devices 202. This is not specifically limited in this embodiment of this application.

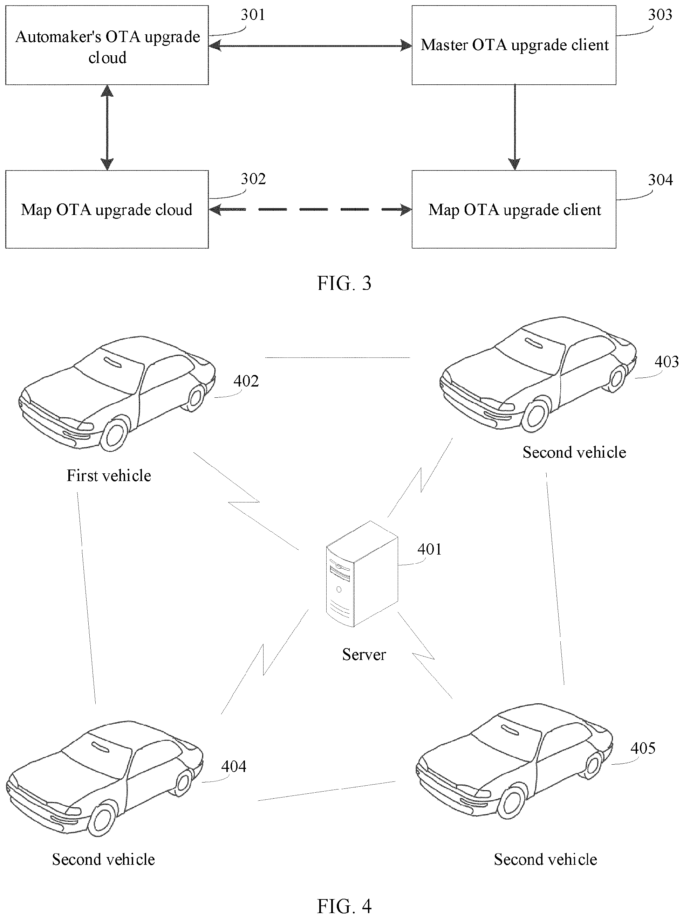

The foregoing two application scenarios may be applicable when a map of a vehicle needs to be updated. The following describes implementation processes of the foregoing two application scenarios in a vehicle. For example, FIG. 3 is a schematic diagram of an architecture of a map update system in a vehicle according to an embodiment of this application. As shown in FIG. 3, the system includes an automaker's OTA upgrade cloud 301, a map OTA upgrade cloud 302, a master OTA upgrade client 303, and a map OTA upgrade client 304.

The automaker's OTA upgrade cloud 301 may be a server of an automaker or an automobile software service provider, and is configured to manage automobile software and store software data. The automobile software may include map software, vehicle body control software, and the like. The map OTA upgrade cloud 302 may be a server of a map supplier, and is configured to manage map software and store map data. The automaker's OTA upgrade cloud 301 may interact with the map OTA upgrade cloud 302. Map information of the automaker's OTA upgrade cloud 301 comes from the map OTA upgrade cloud 302, or the automaker's OTA upgrade cloud 301 may determine map data by itself.

It should be noted that OTA upgrade in a vehicle includes two levels: master node and slave node. In FIG. 3, the master OTA upgrade client 303 corresponds to a master node, and may receive an entire vehicle upgrade package, split the upgrade package, and distribute the obtained upgrade packages to a plurality of slave clients controlled by the master OTA upgrade client 303. The map OTA upgrade client 304 corresponds to a slave node, and may be a slave OTA client controlled by the master OTA upgrade client 303. The map OTA upgrade client 304 may update a map as a part of the OTA upgrade of an entire vehicle.

Therefore, there are two possible map update manners for the system architecture. In a possible implementation, the map OTA upgrade cloud 302 interacts with the map OTA upgrade client 304 to update the map. A specific implementation process is consistent with the description in the first specific application scenario, and details are not described herein again.

In another possible implementation, the automaker's OTA upgrade cloud 301, the master OTA upgrade client 303, and the map OTA upgrade client 304 interact with each other to update the map. For example, the automaker's OTA upgrade cloud device 301 may send identifiers of to-be-updated map tiles and update information of the to-be-updated map tiles to the master OTA upgrade client 302 by using an entire vehicle upgrade package. The master OTA upgrade client 302 receives and downloads the entire vehicle upgrade package, splits the entire vehicle upgrade package, and sends the obtained software upgrades package to the map OTA upgrade client 304. The map OTA upgrade client 304 obtains an update policy based on the identifiers of the to-be-updated map tiles in the obtained vehicle upgrade packages, and downloads, according to the update policy, the update information of the to-be-updated map tiles, to update the map.

For example, FIG. 4 is a schematic diagram of a third specific application scenario according to an embodiment of this application. In this application scenario, the first device is a first vehicle, and the second device is a server or a second vehicle. A network system may include a server 401, a first vehicle 402, a second vehicle 403, a second vehicle 404, and a second vehicle 405.

The server 401 may be a vehicle fleet server. The vehicle fleet server obtains, from an OTA server in advance, an entire vehicle upgrade package used by a vehicle fleet (for example, including the first vehicle 402, the second vehicle 403, the second vehicle 404, and the second vehicle 405) served by the vehicle fleet server.

During routine maintenance of the vehicle fleet, in a scenario in which a network connection is established through wireless fidelity (Wireless-Fidelity, Wi-Fi) or the like, the first vehicle 402, the second vehicle 403, the second vehicle 404, and the second vehicle 405 are connected to the vehicle fleet server. When receiving an upgrade package download notification, the vehicle fleet server and the first vehicle 402, the second vehicle 403, the second vehicle 404, and the second vehicle 405 perform two-way authentication (for example, in a PKI-based authentication manner). After the authentication succeeds, the vehicle fleet server encrypts a cipher key k of an upgrade package (by using a public key of the vehicle), and then delivers the upgrade package to the first vehicle 402, the second vehicle 403, the second vehicle 404, and the second vehicle 405.

For example, the first vehicle 403 downloads a first part of the entire vehicle upgrade package, the second vehicle 404 downloads a second part of the entire vehicle upgrade package, and the second vehicle 405 downloads a third part of the entire vehicle upgrade package. In this case, the first vehicle 402 may download the second part of the entire vehicle upgrade package from the second vehicle 403, download the third part of the entire vehicle upgrade package from the second vehicle 404, and then obtain a complete vehicle upgrade package through decryption by using the key k. The first vehicle 402 updates the map by using the complete vehicle upgrade package. The entire vehicle upgrade package includes identifiers of to-be-updated map tiles and update information of the to-be-updated map tiles. The first vehicle 402 obtains the update policy based on the identifiers of the to-be-updated map tiles, and downloads, according to the update policy, the update information of the to-be-updated map tiles in the vehicle upgrade package, to update the map.

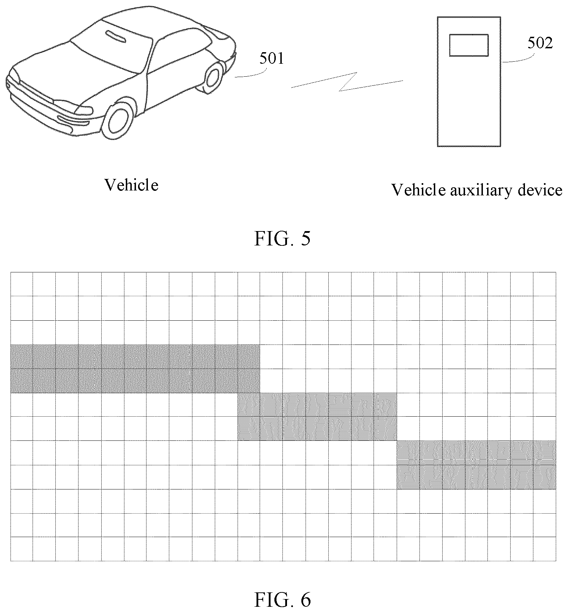

For example, FIG. 5 is a schematic diagram of a fourth specific application scenario according to an embodiment of this application. A network system may include a vehicle 501 and a vehicle auxiliary device 503. The vehicle 501 may be a vehicle in any form. The vehicle auxiliary device 503 may be a vehicle charging pile or any other terminal device (for example, a mobile phone or a tablet) that assists in automotive OTA update or map client update. The vehicle auxiliary device 503 may send, to the vehicle 501, identifiers of to-be-updated map tiles and update information of the to-be-updated map tiles. The vehicle 501 may obtain an update policy based on the received identifiers of the to-be-updated map tiles, and download, according to the update policy, the update information of the to-be-updated map tiles from the vehicle auxiliary device 503, to update the map.

To facilitate understanding of the embodiments of this application, the following first briefly describes some terms used in this application.
1. Map tile: A map tile is a file that includes map slices within a map region at a series of scales to facilitate map management. For example, a process of forming map tiles is as follows: Map software (for example, ArcGIS software) processes map data, configures a layering solution, and saves the solution; and the map software slices the map into rasters according to the solution, to obtain the map tiles.
2. Raster model (tile image): a model that uses grids to simulate entities. A map may be divided into different rasters for management. Each raster uses more than 10 or 20 layers of images at different resolutions to describe a map region. When a map is zoomed, the tile images at corresponding resolutions are selected based on the zoom level to form a complete map.
   In the raster model, each raster includes a plurality of layers, elements included in each layer are relatively fixed, and a map with different elements is implemented by overlaying the layers. For example, FIG. 6 is a schematic diagram of a raster model. As shown in FIG. 6, a map may be sliced into a plurality of grids, and the gray grids in the figure may represent a type of map data element, for example, a road, a river, or a bridge.
3. Base map: a layer that includes common map data elements, such as outlines of roads, rivers, bridges, green fields, buildings, and other ground subjects. The base map can be obtained by selecting necessary map vector data items and setting colors, fonts, display modes, and display rules by a map artist. On the tile base map, layers with different functions can be overlaid to meet application requirements, for example, road directions and satellite maps used for navigation and path planning, and POI layers used to indicate restaurants, gas stations, and supermarkets.
4. Automotive OTA, also known as OTA of an entire device, refers to a process in which a vehicle downloads a software update package from a remote server through a network to update a system of the vehicle. Each update of the automotive OTA corresponds to one vehicle upgrade package and one vehicle version number. One vehicle upgrade package includes software of a plurality of electronic control units (electronic control unit, ECU) in the vehicle. A master node of the vehicle receives the downloaded vehicle upgrade package, and distributes the package to the corresponding ECU software to control the ECU software upgrade. After the automobile software update is completed, the master node of the vehicle needs to feed back the updated vehicle version number to the cloud, to inform the cloud that the automotive OTA upgrade is completed.
5. Automaker's OTA upgrade cloud: a cloud service provided by an automaker or a service provider. The automaker's OTA upgrade cloud is responsible for managing upgrade tasks and software upgrade packages on the cloud and delivering, in an OTA mode, the upgrade tasks and software upgrade packages to vehicles that require software upgrade. In the OTA mode, access may be performed through Wi-Fi, Long Term Evolution LTE, a satellite, or the like.
6. Map OTA upgrade cloud: a cloud service provided by a map supplier. The map OTA upgrade cloud manages map software and high-precision map data on the cloud and delivers upgrade packages to users or vehicles that need to be upgraded in the OTA mode.
7. Master node (update master, referred to as a master node): software deployed on an ECU in a vehicle. The master node is responsible for centralized control of OTA upgrade of an entire vehicle, downloading a vehicle upgrade package from the OTA cloud, splitting the upgrade package, and distributing the obtained upgrade package to corresponding ECUs.
8. Slave node (update slave, referred to as a slave node): software corresponding to a subsystem or a subcomponent included in a master node of a vehicle.
9. Map upgrade application (Client): A map upgrade application is deployed on an ECU where a map client is installed. As a part of the map client, the map upgrade application is responsible for upgrading a map including map data. In addition, the map upgrade application can serve as a slave node to participate in the OTA upgrade of an entire vehicle.
10. Electronic control unit (electronic control unit, ECU): An electronic control unit includes an autonomous driving controller, a cockpit controller, a telematics box (telematics box, T-Box), a gateway, and the like. Software of an ECU may be upgraded by downloading a software upgrade package from the OTA cloud and installing the upgrade package. Alternatively, the software upgrade package can be delivered by the master node after splitting the vehicle upgrade package under centralized control and coordination of the master node.

The following describes in detail channel processing methods provided in the embodiments of this application with reference to the accompanying drawings.

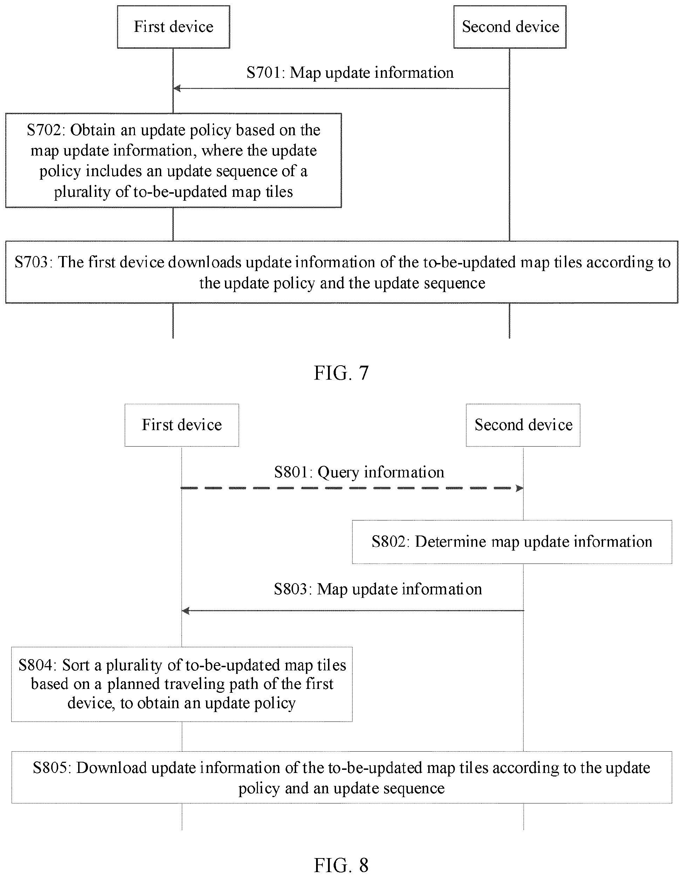

FIG. 7 is a schematic flowchart of a map tile update method according to this application. As shown in FIG. 7, the method in this embodiment is as follows:
S701: A first device receives map update information from a second device, where the map update information includes identifiers of a plurality of to-be-updated map tiles.

In this embodiment of this application, the first device is a device that needs to update a map. A specific form of the first device is described above, and details are not described herein again. The second device is a device that includes the map update information. A specific form of the second device is described above, and details are not described herein again.

Optionally, when the first device is a map OTA upgrade client, the second device is a map OTA upgrade cloud device. When the first device is a master OTA upgrade client in a vehicle, the second device is an automaker's OTA upgrade cloud device.

It may be understood that the map tile update method provided in this embodiment of this application may be used by a map client to update a map, or may be used by a vehicle to upgrade and update a map through OTA.

It may be understood that, in the embodiments of this application, a map is an electronic map, and the map update may be updating map data. A map includes a plurality of elements, such as roads, rivers, buildings, landmarks, bridges, and green fields. Specifically, in a high-precision map of an autonomous driving application, map elements of map tiles further include a lane, a fixed object around a lane, and the like.

In this embodiment of this application, the electronic map manages map data based on map tiles. The map update information may be related information of changed map tiles (that is, to-be-updated map tiles). The map update information may include identifiers of the to-be-updated map tiles. The identifiers of the to-be-updated map tiles are used by the first device to identify the to-be-updated map tiles, so as to prevent the first device from repeatedly downloading or missing update information of the to-be-updated map tiles. Further, the map update information may further include other information about the to-be-updated map tiles, differences between the to-be-updated map tiles and original map tiles, and/or the like. For example, the other information about the to-be-updated map tiles may be coordinate information, lane information, and/or a tile generation time.

In a possible implementation, the identifiers of the to-be-updated map tiles may be numbers of the map tiles, and a numbering rule is determined by a map supplier; or the identifiers of the to-be-updated map tiles may be coordinate information of the map tiles, for example, minimum latitude and longitude and maximum latitude and longitude of the tiles.

S702: The first device obtains an update policy based on the map update information, where the update policy includes an update sequence of the plurality of to-be-updated map tiles. In this embodiment of this application, the update policy is related to related information of the map tiles. The first device may obtain a basis of the update policy based on the map update information. For example, a requirement urgency degree of the to-be-updated map tiles, importance of the to-be-updated map tiles, similarities between the to-be-updated map tiles, and a generation time of map tiles in the first device corresponding to the to-be-updated map tiles. For example, the update policy may be a map tile update sequence determined based on the requirement urgency degree of tile information. It may be understood that the first device may determine related information of the to-be-updated map tiles based on the received map update information, to obtain a basis of the update policy, and determine the update sequence of the to-be-updated map tiles. For example, when the map update information includes the coordinate information, the update policy be an update sequence of the map tiles that is determined based on a requirement urgency degree. The requirement urgency degree is related to a use sequence of the to-be-updated map tiles that is estimated by the first device. If the to-be-updated map tiles are to be first used, the requirement urgency degree is high. Specifically, the first device may determine locations of the to-be-updated map tiles on the map based on the coordinate information. When the coordinate information is closer to a location of the first device, the requirement urgency degree is higher, and an update priority of the to-be-updated map tile is higher.

In a possible implementation, the map update information further includes an update policy. The first device determines the update sequence of the to-be-updated map tiles according to the update policy determined by the second device. Determining of the update policy based on the basis of the update policy will be described in the following map update method, and details are not described herein again.

Then the first device may preferentially update, based on the related information of the to-be-updated map tiles, map tiles that are used or relatively important, and then use the updated map tiles, so as to reduce driving risks caused by the map.

S703: The first device downloads update information of the to-be-updated map tiles according to the update policy and the update sequence.

For example, the first device sends identifiers of the to-be-updated map tiles to the second device according to the update sequence, and the second device transmits the update information of the to-be-updated map tiles based on the received identifiers of the to-be-updated map tiles.

In conclusion, in this embodiment of this application, the update policy is determined based on the map update information, and the related map tiles are determined, so as to determine the update sequence of the tiles, so that some map tiles can be preferentially updated for use. In this way, an update waiting time can be reduced, and a part of a map can be updated in a timely manner, so that driving risks are reduced.

Optionally, the update policy mentioned in S702 is related to one or more of the following auxiliary information: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

It should be noted that the auxiliary information is related to the update policy, and may be used as a basis of the update policy. In this embodiment of this application, the auxiliary information may also be referred to as a basis of the update policy.

With reference to FIG. 8 to FIG. 13, the following describes in detail an update policy that can be used in the embodiments of this application. The update policy in the methods in FIG. 8 to FIG. 13 are related to one of the following: a planned traveling path of a first device, distances between geographical locations corresponding to a plurality of to-be-updated map tiles and a location of the first device, importance of the plurality of to-be-updated map tiles, map content similarities, and freshness of the plurality of to-be-updated map tiles in the first device.

Based on the embodiment corresponding to FIG. 7, in a possible implementation, the update policy is related to a planned traveling path of the first device. S702 includes: The first device sorts the plurality of to-be-updated map tiles based on a trajectory of a traveling path, to obtain the update policy. For example, that the update policy is related to the planned traveling path of the first device is used as an example. FIG. 8 is a schematic flowchart of a specific map tile update method according to this application. As shown in FIG. 8, specific steps are as follows:

S801: A first device sends query information to a second device.

In this embodiment of this application, the query information may be used by the first device to request map update. The query information may be map-related information (for example, a map version number and a map update time) in the first device, or the query information may be a planned traveling path of the first device, a location of the first device, and the like. The query information may alternatively be a command used by the first device to request map update.

It may be understood that the first device sends the query information when establishing a communication connection to the second device, or the first device sends the query information before using the map. For example, when the first device needs to use the map, the first device sends the query information to the second device to query whether the map needs to be updated. In this way, when the first device subsequently uses a map, it can be ensured that the map is of the latest version, thereby improving accuracy of the map.

S802: The second device determines map update information, where the map update information includes identifiers of a plurality of to-be-updated map tiles.

It may be understood that, after the second device receives the query information, the second device may determine the to-be-updated map tiles based on the map-related information of the first device, to determine the map update information.

It should be noted that the second device may determine the map update information in response to the query information in S801, or the second device may automatically determine the map update information and send the map update information to the first device after establishing a communication connection to the first device. In other words, S801 is an optional step.

S803: The second device sends the map update information to the first device.

S804: The first device sorts the plurality of to-be-updated map tiles based on a planned traveling path of the first device, to obtain an update policy.

In a possible implementation, the traveling path may be planned by using an intelligent driving function or a navigation task of the first device, or may be manually selected and entered by a user.

In a possible implementation, the first device sorts a plurality of to-be-updated map tiles based on a trajectory of a planned traveling path of the first device, to obtain the update policy.

It should be noted that, for the trajectory of the traveling path, map tiles related to the traveling path may be determined based on coordinate information of the map tiles. For example, the map update information further includes coordinate information of the to-be-updated map tiles, and the first device compares the coordinate information of the to-be-updated map tiles with coordinate information of tiles used for path planning, to obtain the update policy.

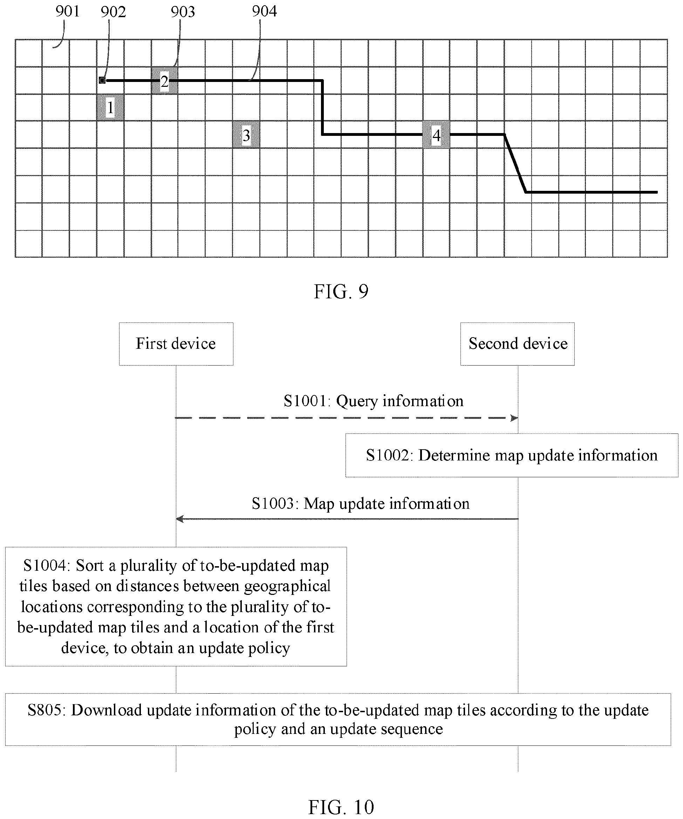

For example, FIG. 9 is a schematic diagram of an electronic map according to an embodiment of this application. As shown in FIG. 9, a map tile 901, a location 902 of a first device, a to-be-updated map tile 903, and a planned traveling path 904 are included. There are four to-be-updated map tiles 903: a to-be-updated map tile 1, a to-be-updated map tile 2, a to-be-updated map tile 3, and a to-be-updated map tile 4. In a possible implementation 1, the first device calculates first differences between the coordinate information of the to-be-updated map tiles and the coordinate information of the map tiles related to the trajectory of the traveling path; and determines an update sequence of the plurality of to-be-updated map tiles based on the first differences. For example, a smaller first difference indicates a higher update priority of the map tile. For example, a sequence of the four to-be-updated map tiles in FIG. 9 may be as follows: the to-be-updated map tile 2, the to-be-updated map tile 4, the to-be-updated map tile 1, and the to-be-updated map tile 3.

In a possible implementation 2, the first device calculates second differences between the coordinate information of the to-be-updated map tiles and the coordinate information of a start point for the path planning, and determines an update sequence of the plurality of to-be-updated map tiles based on the second differences. For example, a smaller second difference indicates a higher update priority of the map tile. For example, a sequence of the four to-be-updated map tiles in FIG. 9 may be as follows: the to-be-updated map tile 2, the to-be-updated map tile 4, the to-be-updated map tile 1, and the to-be-updated map tile 3. In a possible implementation 3, the first device calculates first differences between the coordinate information of the to-be-updated map tiles and the coordinate information of the map tiles related to the trajectory of the traveling path; calculates second differences between the coordinate information of the to-be-updated map tiles and the coordinate information of a start point in the path planning; and determines an update sequence of the plurality of to-be-updated map tiles based on the first difference and the second difference. For example, a smaller first difference indicates a higher update priority of the map tile. When the first differences are the same, a smaller second difference indicates a higher update priority of the map tile. For example, a sequence of the four to-be-updated map tiles in FIG. 9 may be as follows: the to-be-updated map tile 2, the to-be-updated map tile 4, the to-be-updated map tile 1, and the to-be-updated map tile 3.

In a possible implementation, S804 is an optional step. When the map update information includes the update policy, S804 is not performed.

S805: The first device downloads update information of the to-be-updated map tiles according to the update policy and the update sequence.

In conclusion, in this embodiment of this application, the trajectory of the traveling path is a trajectory along which the first device will move. The map tiles related to the trajectory are map tiles to be used by the first device, and the first device has a more urgent requirement for the tiles. For a map tile that is closer to a geographical location of the first device, the first device has a more urgent requirement for the tile. The to-be-updated map tiles are sorted based on the trajectory of the traveling path and/or the distances between geographical locations corresponding to the to-be-updated map tiles and the location of the first device, and the map tiles are sorted based on the requirement urgency degree. In this way, map update is more targeted, and it can be ensured that map tiles related to the trajectory of the traveling path are preferentially downloaded and updated, thereby reducing an update time of the tiles that are to be used by the first device, updating related map information in a timely manner, and reducing a security risk during use of the map.

Based on the embodiment corresponding to FIG. 7, in a possible implementation, the update policy is related to distances between a location of the first device and geographical locations corresponding to a plurality of to-be-updated map tiles. S702 includes: The first device sorts the plurality of to-be-updated map tiles based on distances between geographical locations corresponding to the plurality of to-be-updated map tiles and the location of the first device, to obtain the update policy. For example, that the update policy is related to the distances between geographical locations corresponding to the plurality of to-be-updated map tiles and the location of the first device is used as an example. FIG. 10 is a schematic flowchart of a specific map tile update method according to this application. As shown in FIG. 10, specific steps are as follows:
S1001: A first device sends query information to a second device.

In this embodiment of this application, the query information may be used by the first device to request map update. The query information may be map-related information (for example, a map version number and a map update time) in the first device, or the query information may be a planned traveling path of the first device, a location of the first device, and the like. The query information may alternatively be a command used by the first device to request map update.

It may be understood that the first device sends the query information when establishing a communication connection to the second device, or the first device sends the query information before using the map. For example, when the first device needs to use the map, the first device sends the query information to the second device to query whether the map needs to be updated. In this way, when the first device subsequently uses a map, it can be ensured that the map is of the latest version, thereby improving accuracy of the map.

S1002: The second device determines map update information, where the map update information includes identifiers of a plurality of to-be-updated map tiles.

It may be understood that, after the second device receives the query information, the second device may determine the to-be-updated map tiles based on the map-related information of the first device, to determine the map update information.

It should be noted that the second device may determine the map update information in response to the query information in S1001, or the second device may automatically determine the map update information and send the map update information to the first device after establishing a communication connection to the first device. In other words, S1001 is an optional step.

S1003: The second device sends the map update information to the first device.

S1004: The first device sorts the plurality of to-be-updated map tiles based on distances between geographical locations corresponding to the plurality of to-be-updated map tiles and the location of the first device, to obtain an update policy.

It should be noted that, for map tiles, geographical locations corresponding to the map tiles may be represented by using coordinate information. For example, the map update information further includes the coordinate information of the to-be-updated map tiles, and the first device calculates, by using the coordinate information of the to-be-updated map tiles and the coordinate information of the map tiles corresponding to the geographical location of the first device, distances between the locations corresponding to the to-be-updated map tiles and the location of the first device, so as to obtain the update policy.

In a possible implementation, the first device calculates third differences between the coordinate information of the to-be-updated map tiles and the map tiles corresponding to the location of the first device, and determines an update sequence of the plurality of to-be-updated map tiles based on the third differences. For example, a smaller third difference indicates a higher update priority of the map tile. For example, a sequence of the four to-be-updated map tiles in FIG. 9 may be as follows: the to-be-updated map tile 1, the to-be-updated map tile 2, the to-be-updated map tile 3, and the to-be-updated map tile 4.

In a possible implementation, S1004 is an optional step. When the map update information includes the update policy, S1004 is not performed.

S1005: The first device downloads update information of the to-be-updated map tiles according to the update policy and the update sequence.

In conclusion, in this embodiment of this application, a map tile closer to a geographical location of the first device has a more urgent requirement for the first device. The to-be-updated map tiles are sorted according to a distance between a geographical location corresponding to the to-be-updated map tile and a location of the first device, and the map tiles are sorted according to a requirement urgency degree, so that map update is more targeted, it can be ensured that a map tile near the first device is preferentially downloaded and updated, an update time of a map tile corresponding to a surrounding location of the first device is reduced, map information near the first device is updated in a timely manner, and a security during use of the map is reduced.

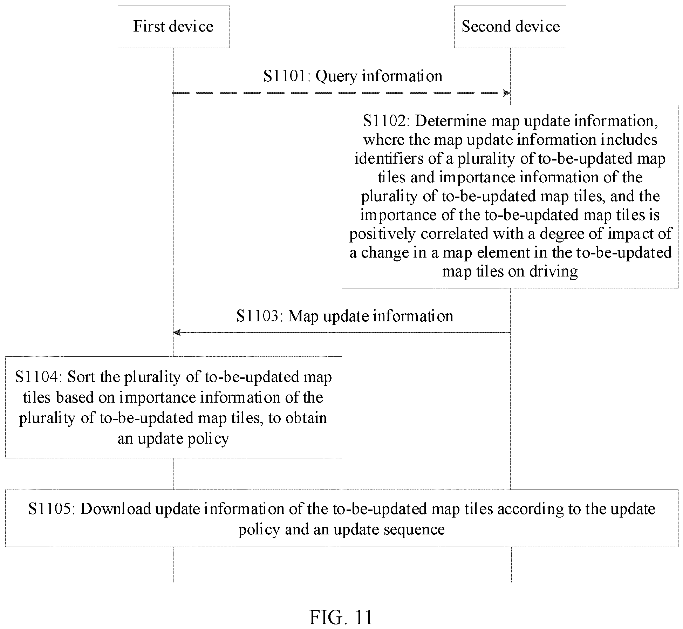

Based on the embodiment corresponding to FIG. 7, in a possible implementation, the update policy is related to importance of a plurality of to-be-updated map tiles. S702 includes: The first device sorts the plurality of to-be-updated map tiles based on importance information of the plurality of to-be-updated map tiles, to obtain the update policy. For example, that the update policy is related to the importance of a plurality of to-be-updated map tiles is used as an example. FIG. 11 is a schematic flowchart of a specific map tile update method according to this application. As shown in FIG. 11, specific steps are as follows:
S1101: A first device sends query information to a second device.

S1102: The second device determines map update information, where the map update information includes identifiers of a plurality of to-be-updated map tiles and importance information of the plurality of to-be-updated map tiles, and the importance of the to-be-updated map tiles is positively correlated with a degree of impact of a change in a map element in the to-be-updated map tiles on driving.

It should be noted that the second device may determine the map update information in response to the query information in S1101, or the second device may automatically determine the map update information and send the map update information to the first device after establishing a communication connection to the first device. In other words, S1101 is an optional step.

In this embodiment of this application, map elements that affect driving may include a road element and the like. The road element may be a lane, a fixed object around a lane, and the like. A lane change may include a change of a location, a type, a width, a gradient, a curvature, and the like of a lane line. A change of a fixed object around a lane may include a change of a quantity, a location, a size, and the like of the fixed object. Fixed objects around a lane include traffic signs and infrastructure. The traffic sign may be a speed limit sign, a height limit sign, a traffic signal light, or the like. The infrastructure may be elevated objects, protection fences, roadside landmarks, and the like.

It may be understood that the map elements have different impact on driving. If road element information in map tiles changes, the first terminal needs to update the map tiles in a timely manner. A higher change degree of the road element information indicates greater impact on driving, and correspondingly, the to-be-updated map tiles are more important.

In a possible implementation 1, the to-be-updated map tiles are classified into important map tiles and unimportant map tiles based on whether the map tile road information changes. For example, a tile whose road element information changes is an important map tile, and a tile whose road element information does not change is an unimportant map tile.

Optionally, the importance information includes first information used to represent importance, or second information used to represent unimportance. The second device sets the first information for the to-be-updated map tiles whose road element information changes, and the second device sets the second information for the to-be-updated map tiles whose road element information does not change.

In this embodiment of this application, the importance information is classified into two types, and correspondingly, the to-be-updated map tiles are also classified into two types. The second device classifies and marks the to-be-updated map tiles, so that the first device subsequently determines an update sequence of the to-be-updated map tiles, downloads update information according to the update sequence, and then uses the map.

It may be understood that the map tiles correspond to different geographical locations, so that map elements included in the map tiles are different. Therefore, impact on driving safety is different. For example, a map tile indicating a change of lane information is more important than a map tile indicating a change of traffic sign information.

In a possible implementation 2, the to-be-updated map tiles may be classified by importance based on different change content of the map elements in the map tiles, for example, important map tiles, sub-important map tiles, and common map tiles. For example, the important map tile is a tile indicating a change of lane information, the unimportant map tile is a tile indicating a change of information of a fixed object around a lane, and the common map tile is a tile indicating that road element information does not change. S1103 : The second device sends the map update information to the first device.

S 1104: The first device sorts the plurality of to-be-updated map tiles based on importance information of the plurality of to-be-updated map tiles, to obtain an update policy.

Optionally, the importance information includes first information used to represent importance, or second information used to represent unimportance; and that the first device sorts the plurality of to-be-updated map tiles based on the importance information of the plurality of to-be-updated map tiles includes: the first device places the to-be-updated map tiles carrying the first information in front of the to-be-updated map tiles carrying the second information.

For example, the to-be-updated map tile 1 and the to-be-updated map tile 3 carry first information that represents importance, and the to-be-updated map tile 2 carries second information that represents unimportance. The first device sorts the three to-be-updated map tiles as follows: the to-be-updated map tile 1, the to-be-updated map tile 3, and the to-be-updated map tile 2.

In a possible implementation, the first information that represents importance is represented by 0, and the second information that represents unimportance is represented by 1. Alternatively, the first information that represents importance is represented by 1, and the second information that represents unimportance is represented by 0. This is not specifically limited in this embodiment of this application.

In a possible implementation, S1104 is an optional step. When the map update information includes the update policy, S1104 is not performed.

S1105: The first device downloads update information of the to-be-updated map tiles according to the update policy and the update sequence.

In this embodiment of this application, the first device updates the map tiles based on the importance information of the to-be-updated map tiles, and preferentially downloads the map tile whose road information changes, so that the first device performs adjustment in a timely manner based on the road information, thereby reducing driving risks.

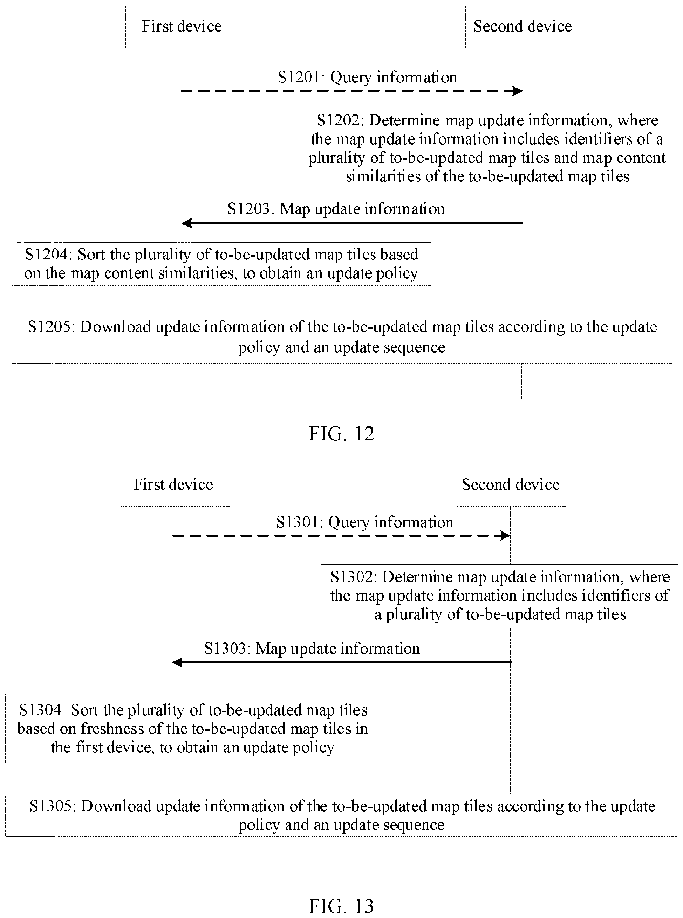

Based on the embodiment corresponding to FIG. 7, in a possible implementation, the update policy is related to map content similarities. S702 includes: The first device sorts the plurality of to-be-updated map tiles based on the map content similarities, to obtain the update policy. For example, that the update policy is related to map content similarities is used as an example. FIG. 12 is a schematic flowchart of a specific map tile update method according to this application. As shown in FIG. 12, specific steps are as follows:
S1201: A first device sends query information to a second device.

S1202: The second device determines map update information, where the map update information includes identifiers of a plurality of to-be-updated map tiles and map content similarities of the to-be-updated map tiles.

It should be noted that the second device may determine the map update information in response to the query information in S1201, or the second device may automatically determine the map update information and send the map update information to the first device after establishing a communication connection to the first device. In other words, S1201 is an optional step. Optionally, the second device calculates a map content similarity between a version of each of the plurality of to-be-updated map tiles in the first device and a latest version; and the second device sets the map content similarity for each of the plurality of to-be-updated map tiles.

It should be noted that the map tile is generally in an image format. A map content similarity can be calculated based on an image similarity. Image similarity calculation includes feature extraction and feature comparison. The second device may perform feature extraction by using an average hash algorithm, a perceptual hash algorithm, a color distribution method, and/or the like. The second device may perform feature comparison by using algorithms such as a Hamming distance algorithm and/or a cosine similarity algorithm.

In this embodiment of this application, the second device calculates and marks the map content similarities, so that the first device can easily sort the to-be-updated map tiles subsequently.

S1203: The second device sends the map update information to the first device.

S1204: The first device sorts the plurality of to-be-updated map tiles based on the map content similarities, to obtain an update policy.

It may be understood that the map content similarities may represent differences between the map tiles. A smaller similarity of the map tiles indicates a larger difference between the map tiles, which indicates that more content of the map tiles has changed and need to be updated.

In a possible implementation, a smaller similarity of map content of the first device indicates a higher ranking of to-be-updated map tiles.

In a possible implementation, S1204 is an optional step. When the map update information includes the update policy, S1204 is not performed.

S1205: The first device downloads update information of the to-be-updated map tiles according to the update policy and the update sequence.

In this embodiment of this application, the first device updates the map tile based on the map content similarities of the to-be-updated map tiles, and preferentially downloads a map tile with a low map content similarity and a large difference, so that the first device performs adjustment in a timely manner based on the map content, thereby reducing driving risks.

Based on the embodiment corresponding to FIG. 7, in a possible implementation, the update policy is related to freshness of a plurality of to-be-updated map tiles in the first device. S702 includes: The first device sorts the plurality of to-be-updated map tiles based on freshness of the to-be-updated map tiles in the first device, to obtain the update policy.

In a possible implementation, the freshness of the to-be-updated map tiles in the first device is related to versions of the to-be-updated map tiles in the first device. For example, the freshness of the to-be-updated map tiles in the first device is used as an example. FIG. 13 is a schematic flowchart of a specific map tile update method according to this application. As shown in FIG. 13, specific steps are as follows:
S1301: A first device sends query information to a second device.

S1302: The second device determines map update information, where the map update information includes identifiers of a plurality of to-be-updated map tiles.

It should be noted that the second device may determine the map update information in response to the query information in S1301, or the second device may automatically determine the map update information and send the map update information to the first device after establishing a communication connection to the first device. In other words, S1301 is an optional step.

It may be understood that the freshness of the to-be-updated map tile may be represented by a timestamp of the to-be-updated map tiles.

S1303: The second device sends the map update information to the first device.

S1304: The first device sorts the plurality of to-be-updated map tiles based on versions of the to-be-updated map tiles in the first device or the freshness of the to-be-updated map tile in the first device, to obtain the update policy.

It may be understood that an earlier time of a map tile in the first device may indicate a higher degree of change of tile content, which indicates that the tile content has a more urgent update requirement.

In a possible implementation 1, a smaller version number of a to-be-updated map tile in the first device indicates a higher update priority of the to-be-updated map tile.

In a possible implementation 2, the map update information further includes a version number of a to-be-updated map tile, and a larger difference between the version number of the to-be-updated map tile in the first device and the latest version number of the to-be-updated map tile indicates a higher update priority of the to-be-updated map tile.

In a possible implementation 3, an earlier timestamp of a to-be-updated map tile in the first device indicates a higher update priority of the to-be-updated map tile.

In a possible implementation 4, the map update information further includes a timestamp of a to-be-updated map tile, and a larger difference between the timestamp of the to-be-updated map tile in the first device and the timestamp of the to-be-updated map tile indicates a higher update priority of the to-be-updated map tile.

In a possible implementation, S1304 is an optional step. When the map update information includes the update policy, S1304 is not performed.

S1305: The first device downloads update information of the to-be-updated map tiles according to the update policy and the update sequence.

In a possible implementation, after downloading the update information of the to-be-updated map tiles, the first device updates versions of the map tiles.

In this embodiment of this application, the to-be-updated map tiles are sorted based on versions of the to-be-updated map tiles in the first device, and map tiles that are not updated for a long time are preferentially updated, so that the first device uses a relatively new map, thereby improving accuracy of the map and reducing a risk during use of the map.

In a possible implementation, any of the five map tile update methods shown in FIG. 8, FIG. 10 to FIG. 13 may be combined with each other.

Specifically, in the embodiment corresponding to FIG. 8, the auxiliary information is a planned traveling path of the first device; in the embodiment corresponding to FIG. 10, the auxiliary information is a distance between a geographical location corresponding to a to-be-updated map tile and a location of the first device; in the embodiment corresponding to FIG. 11, the auxiliary information is importance of a to-be-updated map tile; in the embodiment corresponding to FIG. 12, the auxiliary information is a map content similarity of a to-be-updated map tile; and in the embodiment corresponding to FIG. 13, the auxiliary information is freshness of a to-be-updated map tile in the first device.

In other words, when the first device obtains the update policy, there may be five types of auxiliary information: a planned traveling path of the first device, a distance between a geographical location corresponding to a to-be-updated map tile and a location of the first device, importance of a to-be-updated map tile, a map content similarity of a to-be-updated map tile, and freshness of a to-be-updated map tile in the first device.

During specific implementation, when obtaining the update policy, the first device may combine any two, three, four, or five of the foregoing five types of auxiliary information (referred to as a basis below), and determine the update sequence of the map tiles based on a combined basis.

The following describes how the first device determines the update sequence of the map tiles based on any combination of the five bases.

In a first possible implementation, the five bases may have priorities, and the first device determines the update sequence of the to-be-updated map tiles based on the priorities of the foregoing four bases.

For example, the planned traveling path of the first device has a priority 1, the distance between the geographical location corresponding to the to-be-updated map tile and the location of the first device has a priority 2, the importance information of the to-be-updated map tile has a priority 3, the map content similarity has a priority 4, and the version of the to-be-updated map tile in the first device has a priority 5. Priorities 1, 2, 3, 4, and 5 may be in descending order.

In this case, when the first device sorts the plurality of to-be-updated map tiles based on the priorities of the four bases to determine the update policy, a possible implementation is as follows: When the first device cannot determine the update policy based on the basis corresponding to the priority 1, the first device sorts the to-be-updated map tiles based on the basis corresponding to the priority 2, to determine the update policy; or when the first device cannot determine the update policy based on the basis corresponding to the priority 2, the first device sorts the to-be-updated map tiles based on the basis corresponding to the priority 3, to determine the update policy; or when the first device cannot determine the update policy based on the basis corresponding to the priority 3, the first device sorts the to-be-updated map tiles based on the basis corresponding to the priority 4, to determine the update policy; or when the first device cannot determine the update policy based on the basis corresponding to the priority 4, the first device sorts the to-be-updated map tiles based on the basis corresponding to the priority 5, to determine the update policy.

In this way, when determining the update policy, the first device can have rich choices, so that the update policy can be obtained in various scenarios, and the map tiles can be updated sequentially.

It should be noted that the foregoing priorities corresponding to the five corresponding bases are merely examples for description. In actual application, specific priorities may be set according to an actual situation. For example, the importance information of the to-be-updated map tile has a priority 1, the planned traveling path of the first device has a priority 2, the map content similarity has a priority 3, the version of the to-be-updated map tile in the first device has a priority 4, and the distance between a geographical location corresponding to the to-be-updated map tile and the location of the first device has a priority 5. This is not specifically limited in this embodiment of this application.

It may be understood that the first device may determine the update sequence of the to-be-updated map tiles based on the priorities of any two, three, or four of the foregoing five bases. Technical means and technical effects are similar to those described above, and details are not described herein again.

In a second possible implementation, the five bases correspond to weight values, and the first device determines the update sequence of the to-be-updated map tiles based on the weight values of the foregoing four bases.

For example, a first weight corresponding to the planned traveling path is 0.4, a second weight corresponding to the distance between the geographical location corresponding to the to-be-updated map tile and the location of the first device is 0.2, a third weight corresponding to the importance information of the to-be-updated map tile is 0.2, a fourth weight corresponding to the map content similarity is 0.1, and a fifth weight corresponding to the version of the to-be-updated map tile in the first device is 0.1.

In this case, when the first device sorts the plurality of to-be-updated map tiles based on the weight values of the five bases to determine the update policy, a possible implementation is as follows: The first device separately sorts the to-be-updated map tiles based on the five bases, and obtains four sorting ranks for each map tile; and the first device obtains comprehensive values of the to-be-updated map tiles based on the sorting ranks of the five bases and corresponding weight values, and sorts the to-be-updated map tiles in ascending order of the comprehensive values, to determine the update policy. A method for calculating a comprehensive value of a to-be-updated map tile may be calculating a sum of products of sorting ranks and corresponding weight values.

For example, the first device needs to download update information of four to-be-updated map tiles. The first device separately sorts the four to-be-updated map tiles based on five bases, and obtains four sorting ranks for each to-be-updated map tile. The ranking of a to-be-updated map tile 1 is 1, 1, 2, 3, and 4. The ranking of a to-be-updated map tile 2 is 2, 2, 3, 4, and 1. The ranking of a to-be-updated map tile 3 is 3, 3, 4, 2, and 3. The ranking of a to-be-updated map tile 4 is 4, 4, 1, 1, and 2. When the weight values corresponding to the five bases are respectively 0.4, 0.2, 0.2, 0.1, and 0.1, the comprehensive values of the four to-be-updated map tiles calculated by the first device are respectively 1.7, 2.3, 3.1, and 2.9. The update sequence of the four to-be-updated map tiles is as follows: the to-be-updated map tile 1, the to-be-updated map tile 2, the to-be-updated map tile 4, and the to-be-updated map tile 3.

In this way, when determining the update policy, the first device can comprehensively consider various factors, so as to update the map tiles sequentially in various scenarios.

It should be noted that the weight values corresponding to the foregoing five bases are merely examples for description. In actual application, the specific weight values of the bases may be set according to an actual situation. For example, the first weight corresponding to the planned traveling path of the first device is 0.3, the second weight corresponding to the distance between a geographical location corresponding to a to-be-updated map tile and a location of the first device is 0.2, the third weight corresponding to the importance information of the to-be-updated map tile is 0.2, the fourth weight corresponding to the map content similarity is 0.2, and the fifth weight corresponding to the version of the to-be-updated map tile in the first device is 0.1. This is not specifically limited in this embodiment of this application.

It may be understood that the first device may determine the update sequence of the to-be-updated map tiles based on the weight values of any two, three, or four of the foregoing five bases. Technical means and technical effects are similar to those described above, and details are not described herein again.

In this embodiment of this application, the methods for updating the five types of map tiles may be combined with each other, and a plurality of driving-related factors (for example, a requirement urgency degree and a road information change) are comprehensively considered. Therefore, the methods are applicable to a plurality of scenarios, and can comprehensively improve practicability of the map tile update methods, and reduce safety risks during use of the map.

From the foregoing descriptions of the solutions of this application, it may be understood that, to implement the foregoing functions, each device includes a corresponding hardware structure and/or software unit for performing each function. A person skilled in the art should be easily aware that, in combination with units and algorithm steps of the examples described in the embodiments disclosed in this specification, this application may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

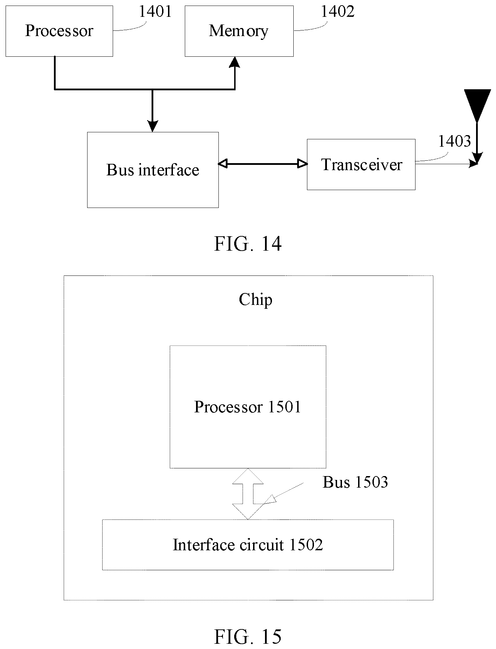

FIG. 14 is a schematic diagram of a structure of a map tile update apparatus according to this application. Refer to FIG. 14. The map tile update apparatus includes a processor 1401, a memory 1402, and a transceiver 1403.

The processor 1401 is responsible for managing a bus architecture and general processing, and the memory 1402 may store data used when the processor 1401 performs an operation. The transceiver 1403 is configured to receive and send data under control of the processor 1401, to perform data communication with the memory 1402. The bus architecture may include any quantity of interconnected buses and bridges, and specifically connects together various circuits of one or more processors represented by the processor 1401 and a memory represented by the memory 1402. The bus architecture may further connect various other circuits such as a peripheral device, a voltage stabilizer, and a power management circuit. These are well known in the art, and therefore are not further described in this specification. The bus interface provides an interface. The processor 1401 is responsible for managing a bus architecture and general processing, and the memory 1402 may store data used when the processor 1401 performs an operation.

The procedures disclosed in an embodiment of this application may be applied to the processor 1401, or may be implemented by the processor 1401. For example, the processor 1401 is applied to a first device, and the processor 1401 is configured to perform S702 and S703; or the processor 1401 is configured to perform S801, S804, and S805; or the processor 1401 is configured to perform S1001, S1004, and S1005; or the processor 1401 is configured to perform S1101, S1104, and S1105; or the processor 1401 is configured to perform S1201, S1204, and S1205; or the processor 1401 is configured to perform S1301, S1304, and S1305; or the processor 1401 is configured to perform another process that may be performed by the first device described in the embodiments of this application.

For example, the processor 1401 is applied to the second device, and the processor 1401 is configured to perform S701; or the processor 1401 is configured to perform S802 and S803; or the processor 1401 is configured to perform S1002 and S1003; or the processor 1401 is configured to perform S1102 and S1103; or the processor 1401 is configured to perform S1202 and S1203; or the processor 1401 is configured to perform S1302 and S1303; or the processor 1401 is configured to another process that may be performed by the second device described in the embodiments of this application.

In an implementation process, steps of the map tile update procedure may be performed by an integrated logic circuit of hardware of the processor 401, or by a software instruction. The processor 1401 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory 1402. The processor 1401 reads information in the memory 1402 and completes the steps of the signal processing procedure in combination with hardware of the processor 1401. In an optional implementation of this embodiment of this application, the processor 1401 is configured to read a program in the memory 1402, to perform the steps performed by the first device or the second device in the foregoing method embodiments. Implementation principles and technical effects of this implementation are similar to those of the foregoing method embodiments, and details are not described herein again.

FIG. 15 is a schematic diagram of a structure of a chip according to an embodiment of this application. The chip includes one or more processors 1501 and an interface circuit 1402. Optionally, the chip may further include a bus 1503.

The processor 1501 may be an integrated circuit chip and has a signal processing capability. In an implementation process, steps in the methods may be implemented by using a hardware integrated logic circuit in the processor 1501, or by using instructions in a form of software. The processor 1501 may be one or more of a general-purpose processor, a digital communicator (DSP), an application-specific integrated circuit (ASIC), a field programmable gate array (FPGA), or another programmable logic device, a discrete gate or transistor logic device, a discrete hardware component, an MCU, an MPU, a CPU, or a coprocessor. The processor 1501 may implement or perform the methods and steps that are disclosed in the embodiments of this application. The general-purpose processor may be a microprocessor, or the processor may be any conventional processor or the like.

The processor 1501 is configured to perform the steps performed by the first device or the second device in the foregoing method embodiments. For example, the processor 1501 is applied to a first device, and the processor 1501 is configured to perform S702 and S703; or the processor 1501 is configured to perform S801, S804, and S805; or the processor 1501 is configured to perform S1001, S1004, and S1005; or the processor 1501 is configured to perform S1101, S1104, and S1105; or the processor 1501 is configured to perform S1201, S1204, and S1205; or the processor 1501 is configured to perform S1301, S1304, and S1305; or the processor 1501 is configured to perform another process that may be performed by the first device described in the embodiments of this application.

For example, the processor 1501 is applied to the second device, and the processor 1501 is configured to perform S701; or the processor 1501 is configured to perform S802 and S803; or the processor 1501 is configured to perform S1002 and S1003; or the processor 1501 is configured to perform S1102 and S1103; or the processor 1501 is configured to perform S1202 and S1203; or the processor 1501 is configured to perform S1302 and S1303; or the processor 1501 is configured to another process that may be performed by the second device described in the embodiments of this application. The interface circuit 1502 may send or receive data, instructions, or information. The processor 1501 may process the data, the instructions, or other information received through the interface circuit 1502, and send, through the interface circuit 1502, information obtained after processing.

Optionally, the chip further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip may be used in the first device or the second device in the embodiments of this application. Optionally, the interface circuit 1502 may be configured to output an execution result of the processor 1501. For the map tile update methods provided in one or more embodiments of this application, refer to the foregoing embodiments. Details are not described herein again.

It should be noted that functions corresponding to the processor 1501 and functions corresponding to the interface circuit 1502 may be implemented by using hardware design, may be implemented by using a software design, or may be implemented by combining software and hardware. This is not limited herein.

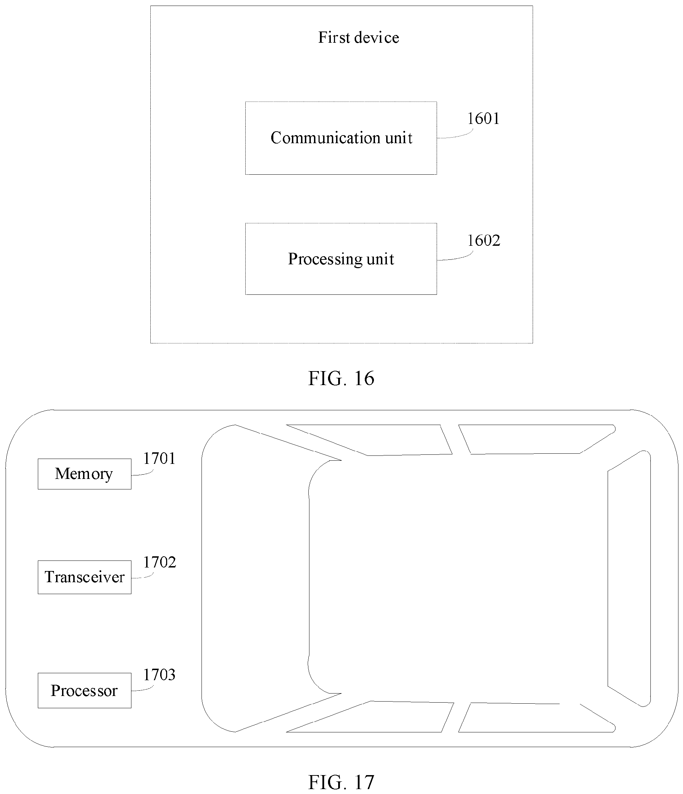

FIG. 16 is a schematic diagram of a structure of a map tile update apparatus applied to a first device according to an embodiment of this application. The map tile update apparatus includes a communication unit 1601 and a processing unit 1602. The communication unit is configured to receive map update information from a second device, where the map update information includes identifiers of a plurality of to-be-updated map tiles; the processing unit is configured to obtain an update policy based on the map update information, where the update policy includes an update sequence of the plurality of to-be-updated map tiles; and the processing unit is further configured to download update information of the to-be-updated map tiles according to the update policy and the update sequence.

Optionally, the update policy is related to one or more of the following auxiliary information: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

Optionally, when the update policy is related to the planned traveling path of the first device, the processing unit is specifically configured to sort the plurality of to-be-updated map tiles based on a trajectory of the traveling path, to obtain the update policy.

Optionally, the processing unit is specifically configured to determine, from the plurality of to-be-updated map tiles, the to-be-updated map tiles related to the trajectory of the traveling path; and the processing unit is further configured to sort, in a direction from a start point to an end point of the trajectory of the traveling path, the to-be-updated map tiles related to the trajectory of the traveling path.

Optionally, when the update policy is related to the distances between the location of the first device and the geographical locations corresponding to the plurality of to-be-updated map tiles, the processing unit is specifically configured to sort the plurality of to-be-updated map tiles based on the distances, to obtain the update policy. Optionally, when the update policy is related to the importance of the plurality of to-be-updated map tiles, the map update information further includes importance information of the to-be-updated map tiles, where the importance of the to-be-updated map tiles is positively correlated with a degree of impact of a change in a map element in the to-be-updated map tiles on driving; and the processing unit is specifically configured to sort the plurality of to-be-updated map tiles based on the importance information of the plurality of to-be-updated map tiles, to obtain the update policy.

Optionally, the importance information includes first information used to represent importance, or second information used to represent unimportance; and the processing unit is specifically configured to place the to-be-updated map tiles carrying the first information in front of the to-be-updated map tiles carrying the second information.

Optionally, when the update policy is related to the map content similarities, the processing unit is specifically configured to sort the plurality of to-be-updated map tiles based on the map content similarities, to obtain the update policy.

Optionally, when the update policy is related to the freshness of the plurality of to-be-updated map tiles in the first device, the processing unit is specifically configured to sort the plurality of to-be-updated map tiles based on the freshness of the to-be-updated map tiles in the first device, to obtain the update policy.

Optionally, when the update policy is related to a plurality of types of the auxiliary information, the processing unit is specifically configured to sort the plurality of to-be-updated map tiles based on priorities of the plurality of types of the auxiliary information and/or weights of the plurality of types of the auxiliary information, to obtain the update policy. Optionally, the communication unit is further configured to send query information to a second device; and the communication unit is further configured to receive the map update information from the second device, where the map update information is sent by the second device in response to the query information.

Optionally, the first device is a map over the air OTA upgrade client, and the second device is a map OTA upgrade cloud device; or the first device is a master OTA upgrade client in a vehicle, and the second device is an automaker's OTA upgrade cloud device.

Optionally, the map update information further includes an update policy. In a possible implementation, functions of the communication unit 1601 and the processing unit 1602 shown in FIG. 16 may be performed by the processor 1401 by running a program in the memory 1402, or may be independently performed by the processor 1401.

As shown in FIG. 17, this application provides a vehicle. The apparatus includes at least one memory 1701, at least one transceiver 1702, and at least one processor 1703.

The memory 1701 is configured to store one or more programs and data information, where the one or more programs include instructions.

The transceiver 1702 is configured to perform data transmission with a communication device in a vehicle, and is configured to perform data transmission with a second device.

The processor 1703 is configured to execute a program to implement the methods shown in the foregoing method embodiments. For example, the processor 1703 is configured to perform S702 and S703; or the processor 1703 is configured to perform S801, S804, and S805; or the processor 1703 is configured to perform S1001, S1004, and S1005; or the processor 1703 is configured to perform S1101, S1104, and S1105; or the processor 1703 is configured to perform S1201, S1204, and S1205; or the processor 1703 is configured to perform S1301, S1304, and S1305; or the processor 1703 is configured to another process that may be performed by the first device described in the embodiments of this application.

An embodiment of this application further provides a map tile update apparatus applied to a second device. The map tile update apparatus includes a communication unit and a processing unit.

The processing unit is configured to determine map update information; and the communication unit is configured to send the map update information to a first device, where the map update information includes identifiers of a plurality of to-be-updated map tiles, the map update information further includes an update policy or auxiliary information, the update policy includes an update sequence of the plurality of to-be-updated map tiles, and the auxiliary information is used by the first device to generate the update policy.

Optionally, the auxiliary information includes one or more of the following: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

Optionally, when the map update information includes the update policy, the processing unit is specifically configured to sort the plurality of to-be-updated map tiles based on a trajectory of the planned traveling path of the first device, to obtain the update policy.

Optionally, when the map update information includes the update policy, the processing unit is specifically configured to sort the plurality of to-be-updated map tiles based on the distances between the geographical locations corresponding to the plurality of to-be-updated map tiles and the location of the first device, to obtain the update policy.

Optionally, when the map update information includes the update policy, the processing unit is specifically configured to sort the plurality of to-be-updated map tiles based on the importance of the plurality of to-be-updated map tiles, to obtain the update policy, where the importance of the to-be-updated map tiles is positively correlated with a degree of impact of a change in a map element in the to-be-updated map tiles on driving. Optionally, the importance information includes first information used to represent importance, or second information used to represent unimportance; the processing unit is specifically configured to set the first information for the to-be-updated map tiles whose road information changes; and the processing unit is further configured to set the second information for the to-be-updated map tile whose road information does not change.

Optionally, when the map update information includes the update policy, the processing unit is specifically configured to sort the plurality of to-be-updated map tiles based on the map content similarities between the versions of the plurality of to-be-updated map tiles in the first device and the latest versions of the plurality of to-be-updated map tiles, to obtain the update policy.

Optionally, when the map update information includes the update policy, the processing unit is specifically configured to sort the plurality of to-be-updated map tiles based on the freshness of the plurality of to-be-updated map tiles in the first device, to obtain the update policy.

Optionally, when the map update information includes the update policy, the processing unit is specifically configured to sort the plurality of to-be-updated map tiles based on priorities of the plurality of types of the auxiliary information and/or weights of the plurality of types of the auxiliary information, to obtain the update policy. Optionally, the processing unit is specifically configured to calculate map content similarities between versions of the plurality of to-be-updated map tiles in the first device and latest versions of the plurality of to-be-updated map tiles. The processing unit sets a respective map content similarity between the plurality of to-updated map tiles.

Optionally, the communication unit is specifically configured to receive query information from the first device; and the communication unit is further configured to send the map update information to the first device in response to the query information.

Optionally, the first device is a map over the air OTA upgrade client, and the second device is a map OTA upgrade cloud device; or the first device is a master OTA upgrade client in a vehicle, and the second device is an automaker's OTA upgrade cloud device.

In some possible implementations, aspects of the map update methods provided in the embodiments of this application may be further implemented in a form of a program product, and the program product includes program code. When the program code is run on a computer device, the program code is used to enable the computer device to perform the steps in the map tile update methods according to various example implementations of this application described in this specification. For example, the program code is used to implement S702 and S703 in the foregoing method embodiments; or the program code is used to implement S801, S804, and S805; or the program code is used to implement S1001, S1004, and S1005; or the program code is used to implement S 1101, S1104, and S1105; or the program code is used to implement S1201, S1204, and S1205; or is used to implement S1301, S1304, and S1305; or the program code is used to implement S701; or the program code is used to implement S802 and S803; or the program code is used to implement S1002 and S1003; or the program code is used to implement S1102 and S1103; or the program code is used to implement S1202 and S1203; or the program code is used to implement S1302 and S1303; or the program code is used to implement another process described in the embodiments of this application. The program product may use one readable medium or any combination of more than one readable medium. The readable medium may be a readable signal medium or a readable storage medium. For example, the readable storage medium may be, but is not limited to, an electrical, a magnetic, an optical, an electromagnetic, an infrared, or a semiconductor system, apparatus or device, or any combination thereof. More specific examples (non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage component, a magnetic storage component, or any appropriate combination thereof.

The program product used for updating map tiles according to an implementation of this application may use a portable compact disc read-only memory (CD-ROM) and include program code, and may run on a server device. However, the program product in this application is not limited thereto. In this specification, the readable storage medium may be any tangible medium that includes or stores a program, and the program may be used by or in combination with a communication transmission apparatus or component.

The readable signal medium may include a data signal propagated in a baseband or as a part of a carrier, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be completely executed on a computing device of a user, partially executed on user equipment, executed as an independent software package, partially executed on a computing device of a user and partially executed on a remote computing device, or completely executed on a remote computing device or server. When the program code is executed on the remote computing device, the remote computing device may be connected to the user's computing device by using any type of network, including a local area network (LAN) or a wide area network (WAN), or may be connected to an external computing device.

An embodiment of this application further provides a computing device readable storage medium for a map update method, that is, content is not lost after a power failure. The storage medium stores a software program, including program code. When the program code is run on a computing device, the software program can implement any one of the foregoing map tile update methods in the embodiments of this application when being read and executed by one or more processors.

An embodiment of this application further provides an electronic device. When each functional module is obtained through division based on each corresponding function, the electronic device includes a processing module, configured to perform the steps in the foregoing embodiment by a first device or a second device. For example, the processing module may perform the operations of S702 and S703; or perform the operations of S801, S804, and S805; or perform the operations of S1001, S1004, and S1005; or perform the operations of S1101, S1104, and S1105; or perform the operations of S1201, S1204, and S1205; or perform the operations of S1301, S1304, and S1305; or perform S701; or perform S802 and S803; or S1002 and S1003; or perform S1102 and S1103; or perform S1202; or perform another process of the technologies described in the embodiments of this application.

All related content of the steps in the foregoing method embodiments may be cited in function descriptions of corresponding functional modules. Details are not described herein again.

Certainly, the first device includes, but is not limited to, the units and modules listed above. In addition, functions that the foregoing functional modules can specifically implement include but are not limited to the functions corresponding to the method steps in the foregoing examples. For detailed descriptions of another unit of the electronic device, refer to detailed descriptions of method steps corresponding to the unit, and details are not described herein again in this embodiment of this application.

When an integrated unit is used, the electronic device in the foregoing embodiments may include a processing module, a storage module, and a communication module. The storage module is configured to store program code and data of the electronic device. The communication module is configured to support communication between the electronic device and another network entity, to implement functions such as calling, data exchange, and Internet access of the electronic device.

The processing module is configured to control and manage an action of the electronic device. The processing module may be a processor or a controller. The communication module may be a transceiver, an RF circuit, a communication interface, or the like. The storage module may be a memory.

Further, the electronic device may further include an input module and a display module. The display module may be a screen or a display. The input module may be a touchscreen, a voice input apparatus, a fingerprint sensor, or the like.

The foregoing describes this application with reference to the block diagrams and/or flowcharts of the method, the apparatus (system), and/or the computer program product in the embodiments of this application. It should be understood that a block of the block diagrams and/or flowcharts and a combination of blocks in the block diagrams and/or flowcharts can be implemented by using computer program instructions. These computer program instructions may be provided to a processor of a general-purpose computer, a processor of a dedicated computer, or another programmable data processing apparatus to produce a machine, so that the instructions executed by the processor of the computer and/or the another programmable data processing apparatus create a method for implementing a specific function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

This application describes a plurality of embodiments in detail with reference to a plurality of flowcharts. However, it should be understood that the flowcharts and related descriptions of corresponding embodiments thereof are merely examples for ease of understanding, and shall not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

A plurality of embodiments described in this application may be arbitrarily combined, or steps may intersect with each other for execution. An execution sequence of the embodiments or an execution sequence of the steps of the embodiments is not fixed, and is not limited to that shown in the figure. The execution sequence of the embodiments and a cross execution sequence of the steps of the embodiments should be determined by using functions and internal logic of the embodiments and the steps.

Although this application is described with reference to specific features and embodiments thereof, it is clear that various modifications and combinations may be made to them without departing from the scope of this application. Correspondingly, this specification and accompanying drawings are merely example description of this application defined by the accompanying claims, and are considered as any of or all modifications, variations, combinations, or equivalents that cover the scope of this application. It is clearly that, a person skilled in the art can make various modifications and variations to this application without departing from the scope of this application. Thus, if these modifications and variations of this application fall within the scope of the claims of this application and equivalent technologies thereof, this application is also intended to include these modifications and variations.

The objectives, technical solutions, and beneficial effects of the present application are further described in detail in the foregoing specific embodiments. It should be understood that the foregoing descriptions are merely specific embodiments of the present application, but are not intended to limit the protection scope of the present application. Any modification, equivalent replacement, or improvement made based on the technical solutions of the present application shall fall within the protection scope of the present application.

## Claims

1. A map tile update method, comprising:
receiving, by a first device, map update information from a second device, wherein the map update information comprises identifiers of a plurality of to-be-updated map tiles;
obtaining, by the first device, an update policy based on the map update information, wherein the update policy comprises an update sequence of the plurality of to-be-updated map tiles; and
downloading, by the first device, update information of the to-be-updated map tiles according to the update policy and the update sequence.

2. The method according to claim 1, wherein the update policy is related to one or more of the following auxiliary information: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

3. The method according to claim 2, wherein when the update policy is related to the planned traveling path of the first device, the obtaining, by the first device, an update policy based on the map update information comprises:
sorting, by the first device, the plurality of to-be-updated map tiles based on a trajectory of the traveling path, to obtain the update policy.

4. The method according to claim 2, wherein when the update policy is related to the distances between the location of the first device and the geographical locations corresponding to the plurality of to-be-updated map tiles, the obtaining, by the first device, an update policy based on the map update information comprises:
sorting, by the first device, the plurality of to-be-updated map tiles based on the distances, to obtain the update policy.

5. The method according to claim 2, wherein when the update policy is related to the importance of the plurality of to-be-updated map tiles, the map update information further comprises importance information of the to-be-updated map tiles, and the importance of the to-be-updated map tiles is positively correlated with a degree of impact of a change in a map element in the to-be-updated map tiles on driving; and
the obtaining, by the first device, an update policy based on the map update information comprises:
sorting, by the first device, the plurality of to-be-updated map tiles based on the importance information of the plurality of to-be-updated map tiles, to obtain the update policy.

6. The method according to claim 2, wherein when the update policy is related to the map content similarities, the map update information further comprises the map content similarities of the to-be-updated map tiles, and the obtaining, by the first device, an update policy based on the map update information comprises:
sorting, by the first device, the plurality of to-be-updated map tiles based on the map content similarities, to obtain the update policy.

7. The method according to claim 2, wherein when the update policy is related to the freshness of the plurality of to-be-updated map tiles in the first device, the obtaining, by the first device, an update policy based on the map update information comprises:
sorting, by the first device, the plurality of to-be-updated map tiles based on the freshness of the plurality of to-be-updated map tiles in the first device, to obtain the update policy.

8. The method according to claim 2, wherein when the update policy is related to a plurality of types of the auxiliary information, the obtaining, by the first device, an update policy based on the map update information comprises:
sorting, by the first device, the plurality of to-be-updated map tiles based on priorities of the plurality of types of the auxiliary information and/or weights of the plurality of types of the auxiliary information, to obtain the update policy.

9. The method according to any one of claims 1 to 8, wherein the receiving, by a first device, map update information from a second device comprises:
sending, by the first device, query information to the second device; and
receiving, by the first device, the map update information from the second device, wherein the map update information is sent by the second device in response to the query information.

10. The method according to claim 1 or 2, wherein the map update information further comprises the update policy.

11. A map tile update method, comprising:
determining, by a second device, map update information; and
sending, by the second device, the map update information to a first device; wherein
the map update information comprises identifiers of a plurality of to-be-updated map tiles, the map update information further comprises an update policy or auxiliary information used by the first device to generate the update policy, and the update policy comprises an update sequence of the plurality of to-be-updated map tiles.

12. The method according to claim 11, wherein the auxiliary information comprises one or more of the following: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

13. The method according to claim 11, wherein when the map update information comprises the update policy, the determining, by a second device, map update information comprises:
sorting, by the second device, the plurality of to-be-updated map tiles based on a trajectory of the planned traveling path of the first device, to obtain the update policy.

14. The method according to claim 11, wherein when the map update information comprises the update policy, the determining, by a second device, map update information comprises:
sorting, by the second device, the plurality of to-be-updated map tiles based on the distances between the geographical locations corresponding to the plurality of to-be-updated map tiles and the location of the first device, to obtain the update policy.

15. The method according to claim 11, wherein when the map update information comprises the update policy, the determining, by a second device, map update information comprises:
sorting, by the second device, the plurality of to-be-updated map tiles based on the importance of the plurality of to-be-updated map tiles, to obtain the update policy; wherein
the importance of the to-be-updated map tiles is positively correlated with a degree of impact of a change in a map element in the to-be-updated map tiles on driving.

16. The method according to claim 11, wherein when the map update information comprises the update policy, the determining, by a second device, map update information comprises:
sorting, by the second device, the plurality of to-be-updated map tiles based on the map content similarities between the versions of the plurality of to-be-updated map tiles in the first device and the latest versions of the plurality of to-be-updated map tiles, to obtain the update policy.

17. The method according to claim 11, wherein when the map update information comprises the update policy, the determining, by a second device, map update information comprises:
sorting, by the second device, the plurality of to-be-updated map tiles based on the freshness of the plurality of to-be-updated map tiles in the first device, to obtain the update policy.

18. The method according to claim 11, wherein when the map update information comprises the update policy, the determining, by a second device, map update information comprises:
sorting, by the second device, the plurality of to-be-updated map tiles based on priorities of the plurality of types of the auxiliary information and/or weights of the plurality of types of the auxiliary information, to obtain the update policy.

19. A map tile update apparatus, applied to a first device and comprising:
a communication unit, configured to receive map update information from a second device, wherein the map update information comprises identifiers of a plurality of to-be-updated map tiles; and
a processing unit, configured to obtain an update policy based on the map update information, wherein the update policy comprises an update sequence of the plurality of to-be-updated map tiles; wherein
the processing unit is further configured to download update information of the to-be-updated map tiles according to the update policy and the update sequence.

20. The apparatus according to claim 19, wherein the update policy is related to one or more of the following auxiliary information: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

21. The apparatus according to claim 20, wherein when the update policy is related to the planned traveling path of the first device, the processing unit is specifically configured to sort the plurality of to-be-updated map tiles based on a trajectory of the traveling path, to obtain the update policy.

22. The apparatus according to claim 20, wherein when the update policy is related to the distances between the location of the first device and the geographical locations corresponding to the plurality of to-be-updated map tiles, the processing unit is specifically configured to sort the plurality of to-be-updated map tiles based on the distances, to obtain the update policy.

23. The apparatus according to claim 20, wherein when the update policy is related to the importance of the plurality of to-be-updated map tiles, the map update information further comprises importance information of the to-be-updated map tiles, and the importance of the to-be-updated map tiles is positively correlated with a degree of impact of a change in a map element in the to-be-updated map tiles on driving; and
the processing unit is specifically configured to sort the plurality of to-be-updated map tiles based on the importance information of the plurality of to-be-updated map tiles, to obtain the update policy.

24. The apparatus according to claim 20, wherein when the update policy is related to the map content similarities, the processing unit is specifically configured to sort the plurality of to-be-updated map tiles based on the map content similarities, to obtain the update policy.

25. The apparatus according to claim 20, wherein when the update policy is related to the freshness of the plurality of to-be-updated map tiles in the first device, the processing unit is specifically configured to sort the plurality of to-be-updated map tiles based on the freshness of the to-be-updated map tiles in the first device, to obtain the update policy.

26. The apparatus according to claim 20, wherein when the update policy is related to a plurality of types of the auxiliary information, the processing unit is specifically configured to sort the plurality of to-be-updated map tiles based on priorities of the plurality of types of the auxiliary information and/or weights of the plurality of types of the auxiliary information, to obtain the update policy.

27. The apparatus according to any one of claims 19 to 26, wherein the communication unit is further configured to send query information to a second device; and
the communication unit is further configured to receive the map update information from the second device, wherein the map update information is sent by the second device in response to the query information.

28. The apparatus according to claim 19 or 20, wherein the map update information further comprises the update policy.

29. A map tile update apparatus, applied to a second device and comprising:
a processing unit, configured to determine map update information; and
a communication unit, configured to send the map update information to a first device; wherein
the map update information comprises identifiers of a plurality of to-be-updated map tiles, the map update information further comprises an update policy or auxiliary information, the update policy comprises an update sequence of the plurality of to-be-updated map tiles, and the auxiliary information is used by the first device to generate the update policy.

30. The apparatus according to claim 29, wherein the auxiliary information comprises one or more of the following: a planned traveling path of the first device, distances between geographical locations corresponding to the plurality of to-be-updated map tiles and a location of the first device, importance of the plurality of to-be-updated map tiles, map content similarities between versions of the plurality of to-be-updated map tiles in the first device and latest versions of the plurality of to-be-updated map tiles, and freshness of the plurality of to-be-updated map tiles in the first device.

31. The apparatus according to claim 29, wherein when the map update information comprises the update policy, the processing unit is specifically configured to sort the plurality of to-be-updated map tiles based on a trajectory of the planned traveling path of the first device, to obtain the update policy.

32. The apparatus according to claim 29, wherein when the map update information comprises the update policy, the processing unit is specifically configured to sort the plurality of to-be-updated map tiles based on the distances between the geographical locations corresponding to the plurality of to-be-updated map tiles and the location of the first device, to obtain the update policy.

33. The apparatus according to claim 29, wherein when the map update information comprises the update policy, the processing unit is specifically configured to sort the plurality of to-be-updated map tiles based on the importance of the plurality of to-be-updated map tiles, to obtain the update policy; wherein
the importance of the to-be-updated map tiles is positively correlated with a degree of impact of a change in a map element in the to-be-updated map tiles on driving.

34. The apparatus according to claim 29, wherein when the map update information comprises the update policy, the processing unit is specifically configured to sort the plurality of to-be-updated map tiles based on a map content similarity between the versions of the plurality of to-be-updated map tiles in the first device and the latest versions of the plurality of to-be-updated map tiles, to obtain the update policy.

35. The apparatus according to claim 29, wherein when the map update information comprises the update policy, the processing unit is specifically configured to sort the plurality of to-be-updated map tiles based on the freshness of the plurality of to-be-updated map tiles in the first device, to obtain the update policy.

36. The apparatus according to claim 29, wherein when the map update information comprises the update policy, the processing unit is specifically configured to sort the plurality of to-be-updated map tiles based on priorities of the plurality of types of the auxiliary information and/or weights of the plurality of types of the auxiliary information, to obtain the update policy.

37. A map tile update apparatus, comprising at least one processor, configured to invoke a program in a memory, to perform the method according to any one of claims 1 to 10, or perform the method according to any one of claims 11 to 18.

38. A map tile update apparatus, comprising at least one processor and an interface circuit, wherein the interface circuit is configured to provide an information input and/or an information output for the at least one processor, and the at least one processor is configured to perform the method according to any one of claims 1 to 10, or perform the method according to any one of claims 11 to 18.

39. A chip, comprising at least one processor and an interface, wherein
the interface is configured to provide program instructions or data for the at least one processor; and
the at least one processor is configured to execute the program instructions to implement the method according to any one of claims 1 to 10, or implement the method according to any one of claims 11 to 18.

40. A computer-readable storage medium, wherein the computer-readable storage medium stores instructions, and when the instructions are executed, a computer is enabled to perform the method according to any one of claims 1 to 18, or perform the method according to any one of claims 11 to 18.

41. A computer program product, comprising a computer program, wherein when being executed by a processor, the computer program implements the method according to any one of claims 1 to 10, or performs the method according to any one of claims 11 to 18.
